(19) Europäisches Patentamt
European Patent Office
Office européen des brevets

(11) **EP 0 993 650 B1**

(12) **FASCICULE DE BREVET EUROPEEN**

(45) Date de publication et mention
de la délivrance du brevet:
**15.01.2003 Bulletin 2003/03**

(51) Int Cl.⁷: **G06K 9/00**

(86) Numéro de dépôt international:
**PCT/FR99/01076**

(21) Numéro de dépôt: **99917002.0**

(22) Date de dépôt: **06.05.1999**

(87) Numéro de publication internationale:
**WO 99/057677 (11.11.1999 Gazette 1999/45)**

(54) **PROCEDE DE SEGMENTATION ET DE RECONNAISSANCE D'UN DOCUMENT, NOTAMMENT D'UN PLAN TECHNIQUE**

VERFAHREN ZUR SEGMENTIERUNG UND ERKENNUNG EINES BELEGES, INSBESONDERE EINER TECHNISCHEN ZEICHNUNG

METHOD FOR SEGMENTING AND IDENTIFYING A DOCUMENT, IN PARTICULAR A TECHNICAL CHART

(84) Etats contractants désignés:
**DE IT**

(30) Priorité: **07.05.1998 FR 9805825**

(43) Date de publication de la demande:
**19.04.2000 Bulletin 2000/16**

(73) Titulaire: **FRANCE TELECOM**
**75015 Paris (FR)**

(72) Inventeurs:
• **GARDES, Joel**
**F-90000 Belfort (FR)**
• **MULLOT, Rémy**
**F-76570 Fresquiennes (FR)**
• **LECOURTIER, Yves**
**F-92250 La Garenne Colombes (FR)**
• **OGIER, Jean-Marc**
**76710 MONTVILLE (FR)**
• **LASSAULZAIS, Alain**
**F-22700 Perros Guirec (FR)**

(74) Mandataire: **Audier, Philippe André et al**
**c/o Société de Protection des Inventions,**
**3, rue du Docteur Lancereaux**
**75008 Paris (FR)**

(56) Documents cités:
• **OGIER J -M ET AL: "Interprétation de documents par cycles "perceptifs" de construction d'objets cohérents" TRAITEMENT DU SIGNAL, 1995, GRETSI, FRANCE, vol. 12, no. 6, pages 627-637, XP002090975 ISSN 0765-0019**
• **ANONYMOUS: "Adaptive Threshold Technique for Local Clutter Suppression. June 1981." IBM TECHNICAL DISCLOSURE BULLETIN, vol. 24, no. 1A, juin 1981, pages 154-155, XP002090976 New York, US**
• **KITTLER J ET AL: "Minimum error thresholding" PATTERN RECOGNITION, 1986, UK, vol. 19, no. 1, pages 41-47, XP002090977 ISSN 0031-3203**
• **OGIER J M ET AL: "ORIGINAL METHOD FOR FEaTURES EXTRACTION AND VECTORIZATION: APPLICATION TO CADASTRAL MAPS" ROBOTICS, VISION AND SENSORS, SIGNAL PROCESSING AND CONTROL, MAUI, NOE. 15 - 19, 1993, vol. 3, 15 novembre 1993, pages 2098-2103, XP000437558 INSTITUTE OF ELECTRICAL AND ELECTRONICS ENGINEERS**
• **MULLOT R ET AL: "An original approach for extracting circular shapes from technical charts" PROCEEDINGS OF THE 13TH INTERNATIONAL CONFERENCE ON PATTERN RECOGNITION, PROCEEDINGS OF 13TH INTERNATIONAL CONFERENCE ON PATTERN RECOGNITION, VIENNA, AUSTRIA, 25-29 AUG. 1996, pages 813-817 vol.3, XP002090978 ISBN 0-8186-7282-X, 1996, Los Alamitos, CA, USA, IEEE Comput. Soc. Press, USA**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Domaine technique et art antérieur

L'invention décrite concerne un procédé de traitement d'informations contenues dans une image ainsi qu'un procédé de reconnaissance de formes. Il trouve application au traitement numérique d'une image, en particulier dans le domaine de la reconnaissance de documents, par exemple de documents techniques.

La reconnaissance de documents ainsi que la récupération de données existant sur les documents papier sont actuellement des enjeux très importants. Il est donc nécessaire de développer des stratégies de gestion électronique de documentation, en vue de la récupération des informations qui y figurent, éventuellement en y incluant des procédés d'acquisition des documents existant sur support papier ou assimilé (calques, microfiches, etc. ...).

On connaît actuellement un certain nombre de techniques de conversion de dessins, notamment de dessins techniques, permettant d'alimenter des bases de données documentaires d'entreprises.

Dans le cas où le fond documentaire à convertir est important, et en utilisant une technique manuelle, la charge de travail s'avère rédhibitoire. Il s'agit en effet alors de saisir les informations textuelles et graphiques du document à l'aide de tables à digitaliser. De plus, la qualité des données ainsi générée n'est pas garantie. Une telle conversion passe d'ailleurs souvent par une sous-traitance, et pose le problème de la confidentialité des données dans un contexte concurrentiel.

On connaît par ailleurs des outils de conversion automatique ou semi-automatique de dessins techniques. Ces outils, et les techniques correspondantes, ont un paramétrage délicat, complexe et très sensible aux variations des règles de représentation des documents. En cas de présence de signaux parasites dans le document, ces outils perdent progressivement leur efficacité et nécessitent un traitement manuel croissant.

Enfin, on connaît des techniques de traitement numérique d'images codées sur 1 bit de profondeur et de documents monochromes. Si ces techniques permettent un "nettoyage" léger du document, elles ne permettent pas de séparer l'information utile du bruit lorsque ce dernier est prépondérant. En effet, un document technique est souvent le résultat de la superposition d'un document essentiel, et d'habillage purement indicatif pour un thème donné.

Par ailleurs, les outils traditionnels de reconnaissance de forme, en particulier dans le cas d'éléments longs, nécessitent souvent l'introduction de données par un opérateur, par exemple celles concernant des segments ou leur longueur. Ces outils ne sont donc pas automatisés ; et, de plus, cette sélection à la main ne rend pas compte des primitives utilisées.

De plus, ces outils traditionnels de reconnaissance de formes ont une interface homme-machine complexe, nécessitant de la part de l'opérateur un apprentissage qui n'est pas en rapport avec son métier. Si c'est, par exemple, le spécialiste de la documentation sur la distribution d'électricité, il devra acquérir des compétences dans le domaine du traitement d'image.

Enfin, ces outils nécessitent d'importantes corrections manuelles après reconnaissance de formes.

Exposé de l'invention

Par rapport à ces techniques, l'invention a pour objet un procédé de traitement d'une image, ou d'informations contenues dans une image, comportant :

- un premier traitement, permettant de définir une zone d'intérêt de l'image,
- la réalisation d'un seuillage adaptatif de cette zone d'intérêt pour obtenir une image seuillée de cette zone d'intérêt, dite première image seuillée,
- la segmentation de l'image seuillée, pour obtenir un premier ensemble de couches morphologiques de l'image seuillée.

On appelle couche moprhologique un ensemble de formes présentant des caractéristiques géométriques (par exemple : taille, surfaces, périmètres intérieur ou extérieur, le rapport longueur sur largeur, etc...) semblables. Ce caractère semblable peut être défini, par exemple dans le cas d'une surface, par une densité de pixels par élément de surface.

Le fait de réaliser un premier traitement pour définir une zone d'intérêt de l'image, puis de réaliser un traitement par seuillage, améliore de façon notoire cette deuxième étape.

Le premier traitement peut être réalisé lui-même par seuillage (ou multiseuillage), par exemple en appliquant l'algorithme de OTSU ou de KITTLER-ILLINGWORTH.

Un traitement de reconnaissance de forme peut ensuite être appliqué à chacune des couches morphologiques du premier ensemble de couches morphologiques. On peut ainsi choisir, pour chaque couche, le traitement de reconnaissance le mieux adapté.

Avant de réaliser un traitement de reconnaissance de forme, le procédé selon l'invention permet une première analyse et une séparation des couches morphologiques dès le départ, sur l'image initiale (qui sera le plus souvent une image "raster", c'est-à-dire une image obtenue à l'aide d'un scanner d'une image réelle). Ainsi, en fonction des besoins, on bénéficie immédiatement, dès les premières étapes du traitement, de l'avantage d'une séparation des couches morphologiques.

En raison d'une classification morphologique des objets, permettant une bonne adéquation d'algorithmes spécialisés aux formes à reconnaître, ce procédé permet de garantir une automatisation des traitements, associée à un paramétrage réduit. Le résultat de ces traitements est un document vectoriel fortement structuré dont la topologie naturelle est respectée.

Par ailleurs, un tel procédé peut s'adapter sans modification du paramétrage aux variations de représentation des thématiques, ou couches morphologiques. L'invention permet d'identifier ces différentes couches, de les séparer, et de ne conserver que les couches utiles pour le traitement de reconnaissance de forme.

Enfin, l'invention s'adapte bien à la reconnaissance des plans de réseaux (par exemple : réseaux de télécommunication, ou réseaux de distribution d'eau ou de gaz ou d'électricité), même s'ils contiennent des fonds de cartes.

Le premier traitement peut être suivi d'une étape d'affinement de la zone d'intérêt de l'image, par exemple par dilatation ou par érosion, pour affiner la sélection de population des pixels.

Ce premier traitement (masque spatial), ainsi d'ailleurs que la première étape de classement en différentes couches morphologiques de l'image, permettent de séparer les informations "utiles" d'un document des informations jugées purement indicatives.

Il est possible, après segmentation de l'image seuillée, de réaliser une étape de seuillage des parties de l'image seuillée correspondant à une des couches morphologiques, l'image obtenue étant dite deuxième image seuillée.

On reprend donc l'information constituée par les niveaux de gris de l'image seuillée, mais limitée par, ou à, une des couches morphologiques, qui est donc alors elle-même utilisée comme masque sur l'image seuillée. Cette information subit elle-même alors un traitement de seuillage, ce qui permet ensuite d'améliorer la segmentation, celle-ci permettant à son tour d'obtenir un deuxième ensemble de couches morphologiques.

On peut ensuite appliquer à chacune des couches du deuxième ensemble de couches morphologiques un traitement de reconnaissance de formes.

L'invention concerne également un dispositif pour la mise en oeuvre d'un procédé de traitement d'images tel que décrit ci-dessus.

L'invention concerne donc un dispositif pour traiter les informations contenues dans une image, comportant :

- des moyens, pour réaliser un premier traitement, permettant de définir une zone d'intérêt de l'image,
- des moyens, pour réaliser un seuillage adaptatif de ladite zone d'intérêt, et pour obtenir une image seuillée,
- des moyens de segmentation de l'image seuillée, pour obtenir un premier ensemble de couches morphologiques de l'image seuillée.

En outre des moyens peuvent être prévus pour appliquer à chacune des couches morphologiques du premier ensemble de couches morphologiques un traitement de reconnaissance de formes.

Ce dispositif peut en outre comporter des moyens pour réaliser, après segmentation de l'image seuillée, une étape de seuillage des parties de l'image seuillée correspondant à une des couches morphologiques, l'image obtenue étant dite deuxième image seuillée.

L'invention a également pour objet un procédé de reconnaissance de forme dans une image, comportant :

- une squelettisation de l'image, pour établir un squelette des éléments de l'image,
- une polygonalisation à partir des pixels du squelette de l'image, pour générer des segments ou bipoints,
- une structuration des bipoints, pour rassembler ceux appartenant à une même forme de l'image.

L'image à laquelle le procédé de reconnaissance de formes est appliqué peut être tirée de l'un des ensembles de couches morphologiques qui ont été définis ci-dessus.

La squelettisation de l'image peut comporter :

- une recherche du degré d'intériorité de chaque pixel,
- une recherche des pixels de degré d'intériorité le plus élevé.

L'étape de polygonalisation peut être suivie d'un traitement pour déterminer les formes à reconnaître au niveau des points multiples. Ce traitement peut comporter la mise en oeuvre d'un premier et d'un second algorithmes de suivi de squelettes :

- le premier algorithme effectuant un suivi de trait privilégiant une bifurcation à gauche dans le cas d'un noeud multiple, générant un premier suivi de squelette,
- le second algorithme effectuant un suivi de trait privilégiant une bifurcation à droite dans le cas d'un noeud multiple, générant un second suivi de squelette.

Une étape de fusion des données résultant de l'application des deux algorithmes de suivi de squelettes peut en outre être prévue, pour supprimer l'information redondante contenue dans les deux suivis de squelettes. Cette fusion des données peut comporter par exemple la détermination des segments, ou bipoints, d'un des suivis de squelette, qui sont inclus, partiellement ou totalement, dans l'autre.

La structuration des bipoints peut. comporter des étapes suivantes :

a) l'établissement d'une seule liste de bipoints, par ordre croissant de longueur,
b) la sélection du plus grand des bipoints de cette dernière liste,
c) la recherche de l'inclusion partielle avec les autres bipoints,
d) le test par polygonalisation, lorsqu'un bipoint partiellement inclus est trouvé lors de l'étape précédente,
e) si le résultat de l'étape d) est positif, l'effacement des bipoints, et le remplacement par le bipoint fusionné, et le retour en c),
f) la poursuite de l'étape c),si le résultat de d) comporte plus de deux points,
g) si l'étape d) ne fournit plus de nouveau bipoints, la mémorisation du dernier bipoint issu de l'étape d), l'effacement de ce bipoint de la liste de bipoints établie en a), et le retour en a).

Selon un autre mode de réalisation le procédé de reconnaissance de formes selon l'invention comporte en outre une étape pour assembler les bipoints contigus dans un même segment, le rassemblement étant réalisé par recherche, de proche en proche, de la continuité physique, dans le voisinage très proche de chaque point d'un bipoint à prolonger par continuité.

Dans le cas où l'image à laquelle s'applique le procédé de reconnaissance de formes représente des chambres ou des locaux techniques situés à des extrémités de tronçons ou d'arcs, le procédé de reconnaissance de formes peut comporter, en outre, une étape de recherche d'occlusions dans l'image, une étape de filtrage des occlusions et une étape de recherche du nombre d'extrémités de tronçons se situant dans le voisinage où était détectée une chambre.

Enfin, l'invention a également pour objet un dispositif pour la mise en oeuvre d'un procédé de reconnaissance de formes selon l'invention, tel que décrit ci-dessus.

Un tel dispositif comporte :

- des moyens pour réaliser une squelettisation de l'image, afin d'établir un squelette de l'image,
- des moyens pour réaliser une polygonalisation à partir des pixels du squelette de l'image,
- des moyens pour structurer les bipoints et rassembler ceux appartenant à une même forme de l'image.

Le dispositif peut en outre comporter des moyens pour exécuter un premier et un second algorithmes de suivi de squelettes :

- le premier algorithme effectuant un suivi de trait privilégiant une bifurcation à gauche dans le cas d'un noeud multiple, générant un premier suivi de squelette,
- le second algorithme effectuant un suivi de trait privilégiant une bifurcation à droite dans le cas d'un noeud multiple, générant un second suivi de squelette.

Les moyens pour exécuter un premier et un second algorithmes de suivi de squelette peuvent en outre permettre de réaliser la fusion des données résultant de l'exécution des deux algorithmes de suivi de squelette, pour supprimer l'information redondante contenue dans les deux suivis de squelette.

Ce dispositif peut en outre comporter les moyens pour rassembler les bipoints contigus dans un même segment.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- Les figures IA et 1B représentent schématiquement les étapes d'un procédé selon l'invention.

- La figure 2 est un exemple de document à reconnaître.
- La figure 3 est un histogramme du document de la figure 2.
- La figure 4 représente l'image obtenue, après masquage du document.
- La figure 5 est un histogramme de l'image représentée en figure 4.
- La figure 6 représente l'image obtenue, après seuillage adaptatif de l'image représentée en figure 4.
- Les figures 7A à 7C représentent trois couches morphologiques obtenues par segmentation de l'image représentée en figure 6.
- La figure 8 représente un dispositif pour mettre en oeuvre la présente invention.
- La figure 9 est un exemple de résultat de polygonalisation.
- Les figures 10A et 10B sont des exemples de résultat d'algorithme de suivi de squelette, respectivement trigonométrique et anti-trigonométrique.
- La figure 11 illustre le principe de l'inclusion.
- La figure 12 représente des configurations possibles entre bipoints.
- La figure 13 représente un tracé de réseau, après fusion finale des bipoints.
- La figure 14 représente un tracé obtenu par structuration des bipoints.
- La figure 15 est un exemple de chambres sur un plan original scannérisé.
- La figure 16 représente un exemple d'occlusions.

Description détaillée de modes de réalisation de l'invention

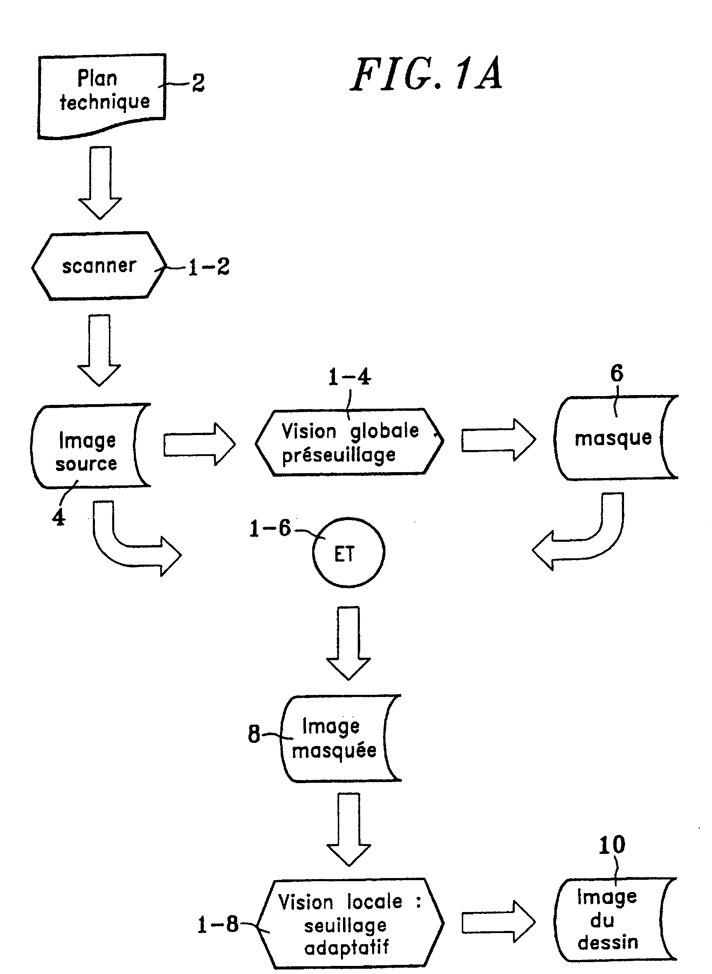

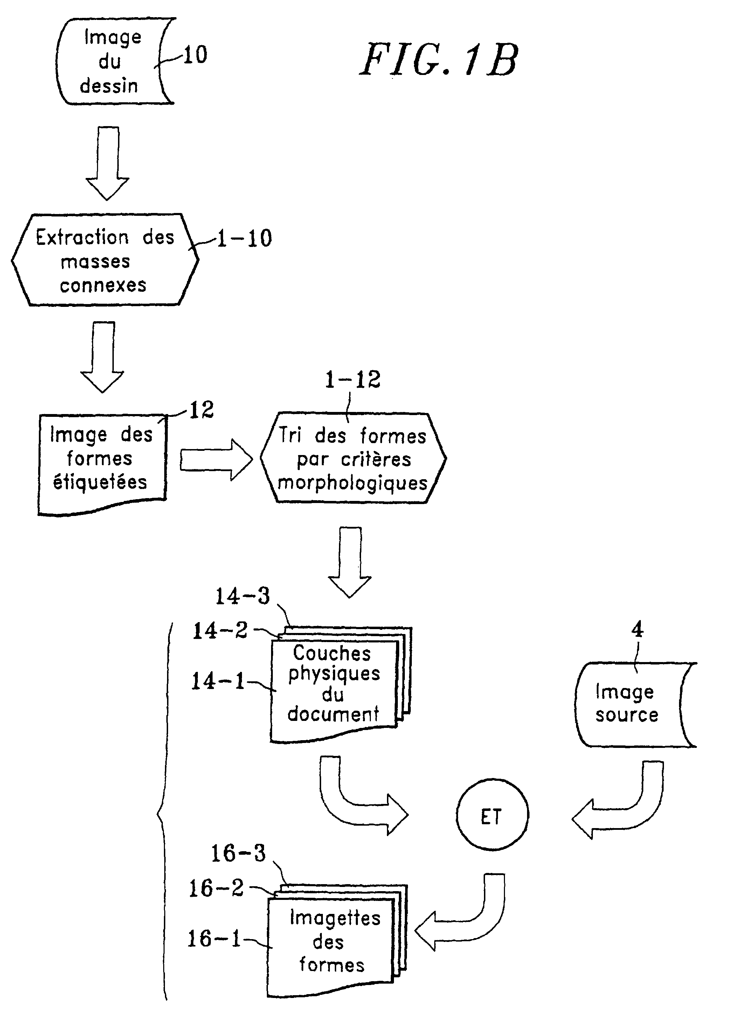

Les figures 1A et 1B représentent des étapes d'un procédé pouvant être mis en oeuvre conformément à l'invention.

Un document technique 2 (figure 1A) est tout d'abord "scanné" (ou échantillonné, étapes 1-2), par exemple sous un format 8 bits, et à résolution élevée, par exemple supérieure à 400 dpi. Cette étape fournit donc une image source 4.

A cette image source, un premier traitement 1-4 va être appliqué, permettant de définir une zone d'intérêt de l'image. Cette première étape (dite également étape d'approche globale) peut être mise en oeuvre par exemple par seuillage, le, ou les, niveau(x) de seuil appliqué(s) étant déterminé(s) par un algorithme de seuillage à partir de l'histogramme du niveau de gris de l'image source. Ce seuillage permet de définir différente classes (au moins deux) de niveaux de gris dans l'histogramme de l'image. Par exemple, au moins une de ces classes correspond au fond de l'image et n'est pas retenue : le mode du fond est donc alors ramené à 0 dans l'image source. De cette opération, on peut donc en déduire un masque 6, qui permet de définir une zone d'intérêt de l'image.

L'image masquée 8 est obtenue par application (1-6) du masque à l'image source 4. Cette image masquée ne contient donc plus que les éléments du document qui sont choisis comme significatifs.

On réalise ensuite un traitement local (approche locale) de l'image : l'image masquée va subir un seuillage adaptatif (étape 1-8) à l'aide d'un algorithme de seuillage. On obtient ainsi une image dite "seuillée" 10. L'opération de seuillage réalisée sur l'image masquée est beaucoup plus efficace, ou beaucoup plus précise, que celle qui aurait été réalisée directement sur l'image source 4. En particulier, on peut obtenir, grâce à ce procédé, la différenciation de certains détails de l'image, qui auraient été confondus s'il avait été procédé directement au seuillage sur l'image source.

On procède ensuite (figure 1B, étape 1-10) à une opération d'extraction des masses de pixels connexes. On produit ainsi des images 12, chaque image représentant des masses, ou des formes, similaires de pixels.

Ces formes sont ensuite triées (étape 1-12) par critères morphologiques. L'opération consistant à "étiqueter" les formes et à les classer selon des critères morphologiques s'appelle opération de segmentation. On obtient ainsi la définition de "couches" physiques 14-1, 14-2, 14-3, ... du document. Le fait de trier les formes en fonction de leur morphologie permet ensuite de les soumettre à des algorithmes de reconnaissance spécialisés, et adaptés à chacune des formes.

Chacune des différentes couches physiques ainsi définie peut être considérée à son tour comme un masque pour l'image source 4. L'application de ces masques à l'image source permet d'obtenir des petites images 16-1, 16-2, 16-3, ... au format de l'image source (ici : 8 bits). Chaque couche physique permet donc de retrouver l'information qui lui correspond, en niveau de gris, dans l'image source.

Chacune des image 16-1, 16-2, 16-3, ... peut être à son tour soumise à un traitement par seuillage, afin d'améliorer la segmentation de l'image. Une fois les nouveaux seuils déterminés sur une des images 16-i, un nouveau cycle peut être recommencé avec cette image 16-i : on peut resegmenter cette image par la taille des masques connexes. On peut ainsi arriver à séparer des formes (ou des caractères), qui, sur le plan technique 2, étaient déconnectées ou séparées, mais qui apparaissaient connectées dans l'image source 4.

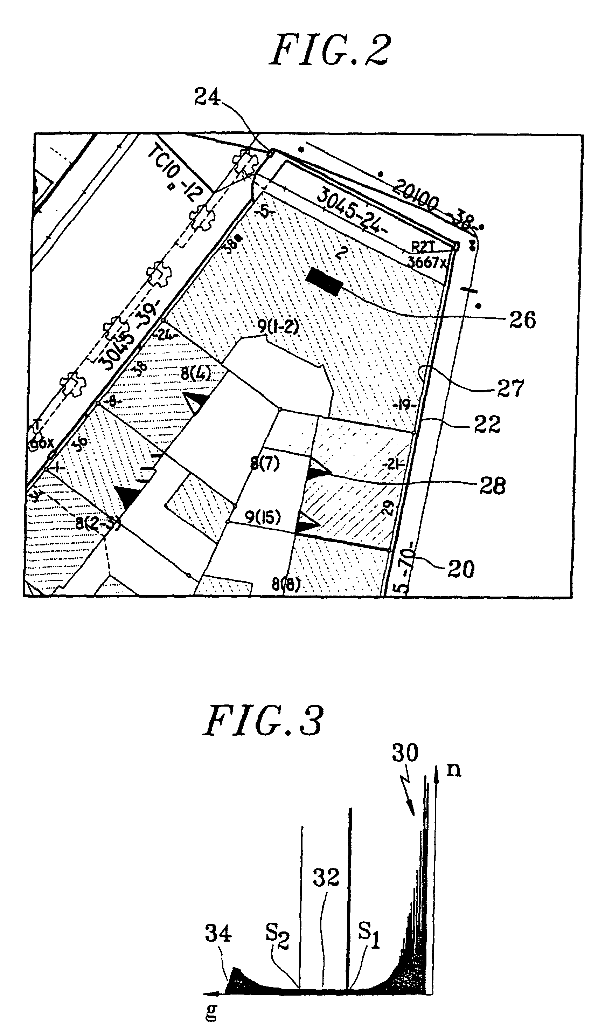

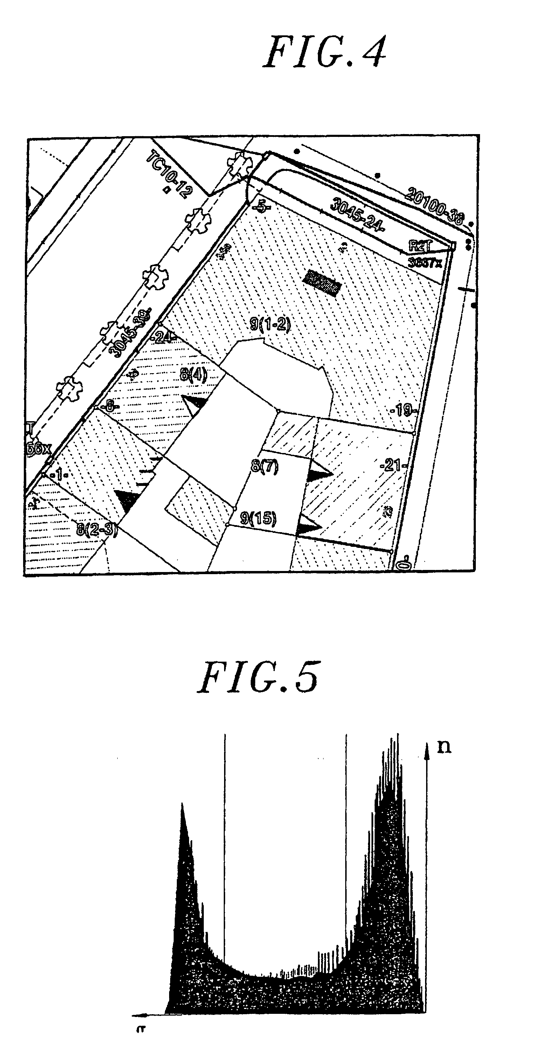

La figure 2 est un exemple caractéristique du type de document à reconnaître. Les éléments à extraire ont été repérés, ce sont ceux qui dérivent l'itinéraire d'un réseau téléphonique. Ainsi, on trouve des caractères 20, des tronçons 22 de réseau, des chambres 24 (les chambres de câbles), une réglette d'immeuble 26, des points de concentration (PC) 28 (coffrets permettant le raccordement d'un usager à un réseau) ou des bords de parcelles 27. L'examen de cette image en niveau de gris montre un fort bruit de fond, dû à la qualité du support et une grande connexité des éléments à extraire avec le fond de plan cartographique. La description de l'histogramme de cette image, représenté en figure 3, met en évidence ces caractéristiques.

Cet histogramme comporte essentiellement trois régions :

- une première région 30 (ou "mode haut") qui contient uniquement le fond de l'image,
- une région centrale 32, qui contient principalement une information cadastrale,
- une troisième région 34 (ou "mode bas") qui contient principalement l'information du réseau téléphonique.

Dans une première approche de l'image, dite approche globale, on détermine la zone d'intérêt englobant le réseau. Pour cela, on procède à un multiseuillage adaptatif ; il s'agit ici d'un multiseuillage en trois classes, basé sur l'algorithme d'OTSU. Les axes verticaux indiquent les valeurs de seuil $S_1$, $S_2$ calculées par l'algorithme à partir de l'histogramme.

On peut affecter une couleur aux pixels de chacune des trois classes, et voir quelle est la répartition spatiale de ces classes (figure 4).

On observe que le réseau s'inscrit entièrement dans la classe représentée en gris sur l'image. Toutefois, le bruit reste très important et il n'est pas possible de présenter directement cette classe à un système de reconnaissance. Par contre, cette classe correspond à l'étendue spatiale de l'image de départ contenant le réseau.

Grâce à l'approche globale de l'image, on a donc isolé une zone d'intérêt correspondant à l'étendue spatiale dans laquelle s'inscrit entièrement le réseau. Cette zone est le résultat d'un multiseuillage basé sur la recherche des modes caractéristiques de l'histogramme. Partant du principe que le réseau est inclus dans cette classe, on effectue un masquage de l'image de départ pour éliminer les pixels du fond. C'est par sélection des classes qu'on sélectionne le masque spatial.

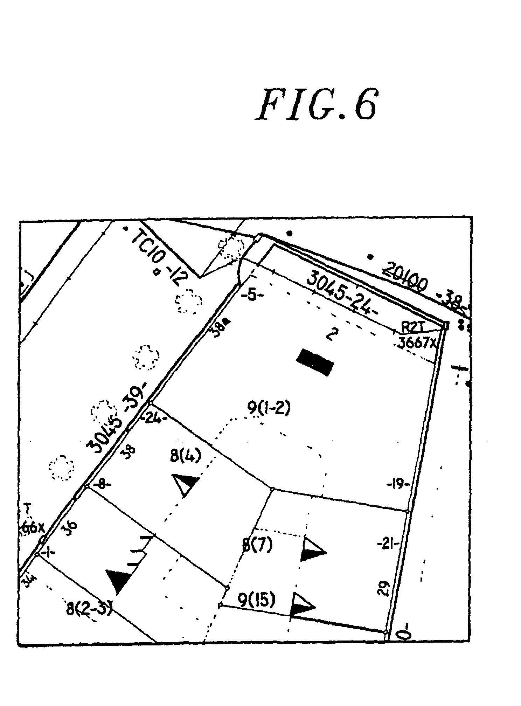

L'image obtenue est un "découpage" de l'image en niveau de gris g dont l'histogramme est donné en figure 5. La discrimination des modes y est nettement améliorée, du fait de l'exclusion de la population des pixels du fond de l'image. A partir de maintenant, la chaîne de traitement n'utilise plus que les éléments significatifs du document.

Plusieurs algorithmes de seuillage ont été utilisés (OTSU, KITTLER-ILLINGWORTH et un classifieur spectral, ISODATA, décrit dans le logiciel IMAGINE de la Société ERDAS). Les résultats obtenus ont montré que le retour sur l'image source, pour n'utiliser qu'une population significative de pixels, optimise de façon notoire le fonctionnement des différents traitements de seuillage.

De plus, dans la constitution du masque, on peut utiliser des opérateurs de morphologie mathématique classiques, faciles à réaliser(dilatation ou érosion d'images), pour affiner la sélection de population.

Finalement, on a construit une zone d'intérêt sur laquelle on peut procéder à une segmentation des formes de l'image (figure 6).

On constate sur cette figure que la majorité des informations du fond cartographique ont été éliminées ; c'est le cas, notamment, des hachures des bâtiments, qui sont de forts éléments perturbateurs de la vectorisation. Cette information n'est pas nécessairement perdue car elle est discriminée par le choix des classes dans l'image seuillée.

Cette image seuillée va ensuite être segmentée.

L'opération de segmentation consiste à étiqueter les formes présentes, et à les classer selon des critères morphologiques. Chacune des formes étiquetées constitue une masse connexe de pixels. Dans notre prototype, cette segmentation consiste à déterminer trois classes de formes :

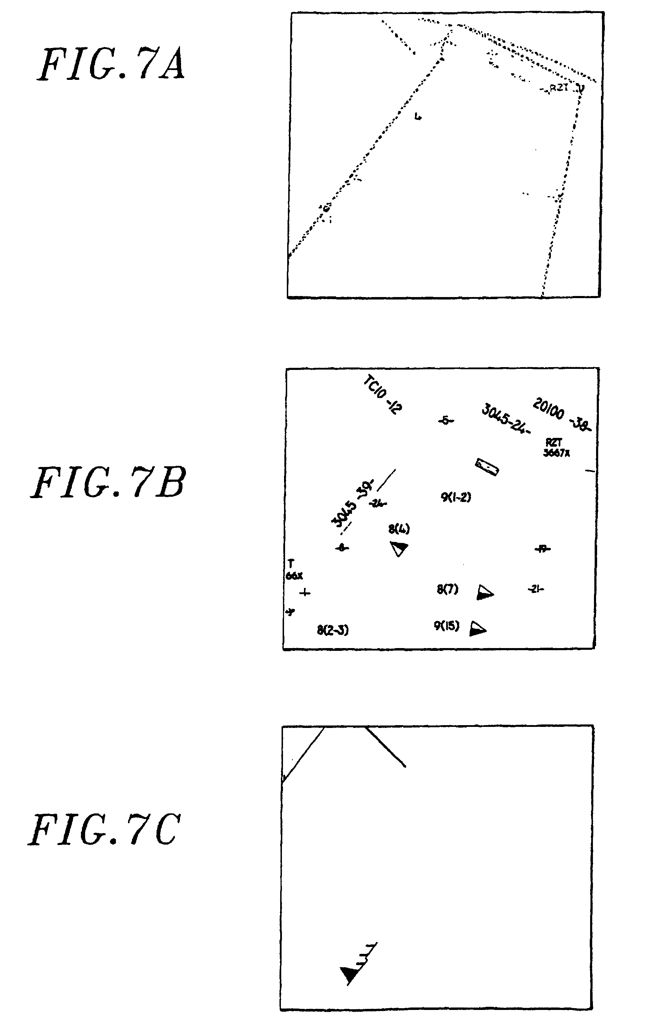

- des grands éléments linéaires, contenant principalement les conduites (tronçon d'artères du réseau) et les chambres de câbles (figure 7A),
- des formes correspondant aux équipements terminaux du réseau (PC, dont la symbologie est ici représentée par des triangles ou des rectangles) et aux caractères (figure 7B),
- des formes dont la morphologie n'entre dans aucun des critères précédents (figure 7C).

Ces trois couches constituent un modèle physique du document. Le fait de trier les formes en fonction de leur morphologie va permettre de les soumettre à des algorithmes de reconnaissance spécialisés et adaptés à chacune des formes.

Chaque couche contient la majorité des éléments à reconnaître. Dans la suite, on s'attachera, par la reconnaissance de formes (voir plus loin), à étudier les couches, et notamment celles contenant les tronçons d'artères (figure 7A).

On peut considérer les trois couches comme un ensemble de masques sur des objets de même classe. On peut donc, à l'aide de ces masques, retrouver l'information en niveaux de gris concernant une seule classe. L'image en niveau de gris générée à partir des différents masques pourra ainsi être reseuillée, afin d'améliorer la segmentation de l'image. En effet, en réduisant le nombre de types d'informations dans l'image, la détermination des seuils automatiques sera plus pertinente.

Une fois les nouveaux seuils déterminés, un nouveau cycle recommence avec cette nouvelle image. On resegmente cette nouvelle image par la taille des masses connexes.

Les résultats sont tout à fait satisfaisants. La plupart des caractères connectés se sont déconnectés. Les seuls qui restent encore connectés, le sont également sur l'image originale. Leur segmentation ne pourra donc pas se faire à ce niveau de traitement. Enfin, chacune des couches ainsi obtenue est présentée aux processus de reconnaissance de formes en autorisant la mise en oeuvre d'algorithmes les mieux adaptés à la thématique physique proposée.

Les algorithmes de seuillage utilisés peuvent par exemple mettre en oeuvre la méthode de OTSU, ou bien celle de KITTLER-ILLINGWORTH.

La méthode de OTSU ("A threshold selection method from gray level hystograms", IEEE Trans. Syst. Man Cyber, 1, p. 62-66, 1979) assimile le problème de détermination d'un seuil pertinent T, pour la binarisation de l'image, à un problème de meilleure classification des pixels en deux sous-groupes $C_{1T}$ et $C_{2T}$.

Une de ces classes contient toujours le fond, et l'autre les objets de l'image.

L'histogramme de l'image, pour un niveau de gris t, permet de calculer les données statistiques vues précédemment : probabilité a priori d'appartenance, niveau de gris moyen, et variance pour chaque classe $C_1$ et $C_2$. OTSU en a déduit les relations suivantes :

- niveau de gris moyen pour l'ensemble de l'image :

$$g_T = \sum_{g=0}^{L} g \cdot p(g) = \sum_{j=1,2} \omega j(t) \cdot g j(t)$$

- variance pour l'ensemble de l'image :

$$\sigma^2(t) = \sum_{g=0}^{L} (g - g_T)^2 \cdot p(g) = \sigma^2{}_w(t) + \sigma^2{}_B(t)$$

avec :

$$\sigma^2{}_w(t) = \sum_{j=1,2} \omega j(t) \cdot \sigma^2 j(t)$$

appelée variance intra-classes,

$$\sigma^2{}_B(t) = \sum_{j=1,2} \omega j(t) \cdot \left( g j(t) - g_T \right)^2$$

appelée variance interclasses.

OTSU introduit le critère de discrimination suivant, dépendant de t, que l'on devra maximiser :

$$\eta(t) = \frac{\sigma^2{}_B(t)}{\sigma^2 T}$$

Ce rapport traduit la pertinence du choix de seuil t pour binariser l'image. En effet, quelle que soit la variance totale de l'image, un seuil optimal se traduit par une valeur maximale de la variance entre la classe correspondant au fond et celle correspondant aux objets $\sigma^2_B(t)$.

Donc, si t est optimal, et $\sigma$ la variance pour l'ensemble de l'image ne dépend par de t, $\eta(t)$ atteint son maximum. L'évaluation de $\eta(t)$ nécessite le calcul préalable de $\sigma^2_B(t)$ et de $\sigma^2 T$. Au lieu d'exploiter $\eta(t)$ pour rechercher le seuil optimal, on peut utiliser le fait que : $\sigma^2 T = \sigma^2_w(t) + \sigma^2_B(t)$ est une constante pour tout t.

Or, pour T, seuil optimal, on a $\sigma^2_B(t)$ maximal, soit $\sigma^2_w(t)$ minimal.

Par conséquent, classifier selon cette première méthode revient à trouver la frontière qui, d'une part, maximise la variance interclasses de manière à séparer les classes, et, d'autre part, minimise la variance intraclasses de manière à regrouper les niveaux de gris de chaque classe autour de sa moyenne.

Dans la méthode de KITTLER et ILLINGWORTH (Kittler et al., "Minimum error thresholding", Pattern Recognition, 25(9), p. 963-973, 1992), l'hypothèse de départ est que les populations $C_1$ et $C_2$ associées aux fond et à l'objet suivent des distributions gaussiennes.

Soit T le seuil de changement de modèle gaussien donné a priori, et soit h(g) l'histogramme de l'image ; alors on peut définir les paramètres de chaque population Ci(i=1,2) :

$\omega i(T)$, gi(T) et $\sigma^2 i(T)$

Soit h(g/i,T) la loi approchée de h(g), conditionnellement à la population i et au seuil T. Pour un niveau de gris g dans [0,L], on définit la probabilité conditionnelle, pour que g soit remplacé dans l'image par une valeur correcte, après binarisation, quand T est choisie par :

$$e(g, T) = \frac{h(g / i, T).\omega i(T)}{h(g)} \quad \text{où } i = \begin{cases} 1 \text{ si } g \leq T \\ 2 \text{ si } g > T \end{cases}$$

Notons :

$$\varepsilon(g,T) = -2\log(h(g).e(g,T)) = -2\log(h(g/i,T).\omega i(T)) \quad (4)$$

Or, on a, par hypothèse :

$$h(g / i, T) = \frac{1}{\sqrt{2\pi}.\sigma i(T)} \exp\left(-\left[\frac{(x - gi(T))^2}{2\sigma^2 i(T)}\right]\right) \text{ pour } i = 1,2 \quad (5)$$

En combinant (4) et (5), on en déduit :

$$\varepsilon(g, T) = 2\log\sqrt{2\pi} + 2\log\sigma i(T) + \left[\frac{g - gi(T)}{\sigma i(T)}\right]^2 - 2\log\omega i(T \quad (6)$$

On ne s'intéresse qu'à la partie non constante, donnée par :

$$\varepsilon'(g, T) = \varepsilon(g, T) - 2\log\sqrt{2\pi} \quad (7)$$

$\varepsilon'(g,T)$ est un indicateur de la classification correcte de g. Plus il sera petit, meilleur sera T pour la classification de ce pixel.

Pour évaluer la qualité du seuillage obtenu pour une valeur de T donnée, KITTLER & ILLINGWORTH ont défini le critère suivant :

$$J(T) = \sum_{g} h(g) \cdot \varepsilon'(g, T) \qquad (8)$$

Le seuil optimal T* pour la binarisation de l'image sera donné par : $J(T^*)=\min_T J(T)$.

On obtient, par ailleurs :

$$J(T) = \sum_{g=0}^{T} h(g) \cdot \left[ 2 \log \sigma_1(T) - 2 \log \omega_1(T) + \left( \frac{g - g_1(T)}{\sigma_1(T)} \right)^2 \right] +$$

$$(9)$$

$$\sum_{g=T+1}^{L} h(g) \cdot \left[ 2 \log \sigma_2(T) - 2 \log \omega_2(T) + \left( \frac{g - g_2(T)}{\sigma_2(T)} \right)^2 \right]$$

En partant de (9) et en considérant (1), (2) et (5), on arrive à la formulation suivante du critère de KITTLER & ILLINGWORTH :

$$J(T)=1+2[\omega_1(T) \log\sigma_1(T) + \omega_2(T) \log\sigma_2(T)]$$

$$-2[\omega_1(T)\log\omega_1(T)+\omega_2(T)\log\omega_2(T)] \qquad (10)$$

Pour déterminer le seuil optimal, il suffit de rechercher T tel que J(T) soit minimal.

Ces méthodes peuvent être étendues au multiseuillage. Cela ne manque pas d'intérêt dans certains cas, en particulier dans celui exposé ci-dessus. En effet, les histogrammes donnés en exemple comportent deux modes, et une large région indéfinie entre les deux. Il semble donc légitime de vouloir rechercher trois classes, c'est-à-dire une pour chaque mode, et une dernière pour la région indéfinie, d'où la nécessité de trouver deux seuils. Ceci est un paramètre choisi a priori. Choisir plus de deux seuils pourrait présenter aussi un intérêt dans certains cas.

Dans le procédé décrit ci-dessus, un document technique est tout d'abord "scanné" à l'aide d'un dispositif de type scanner approprié. On obtient ainsi des clichés originaux, que l'on peut stocker sous la forme d'images numériques.

Le procédé de traitement d'images conforme à l'invention peut être mis en oeuvre à l'aide d'une station de travail Unix ou Windows. Cette station peut travailler indépendamment du scanner dont les images ont été préalablement mémorisées. Le programme de traitement des données conforme à l'invention peut être stocké sur bandes magnétiques ou sur une ou plusieurs disquettes. Les programmes sont développés sous Unix, en langage C compatible ANSI et sont portables sur différentes stations de travail UNIX/Motif ou micro-ordinateur de type PC sous WINDOWS NT4. La station de travail peut en outre incorporer un dispositif de visualisation.

Le système informatique utilisé comporte une section de calcul avec microprocesseur et toutes les composantes électroniques nécessaires au traitement des images.

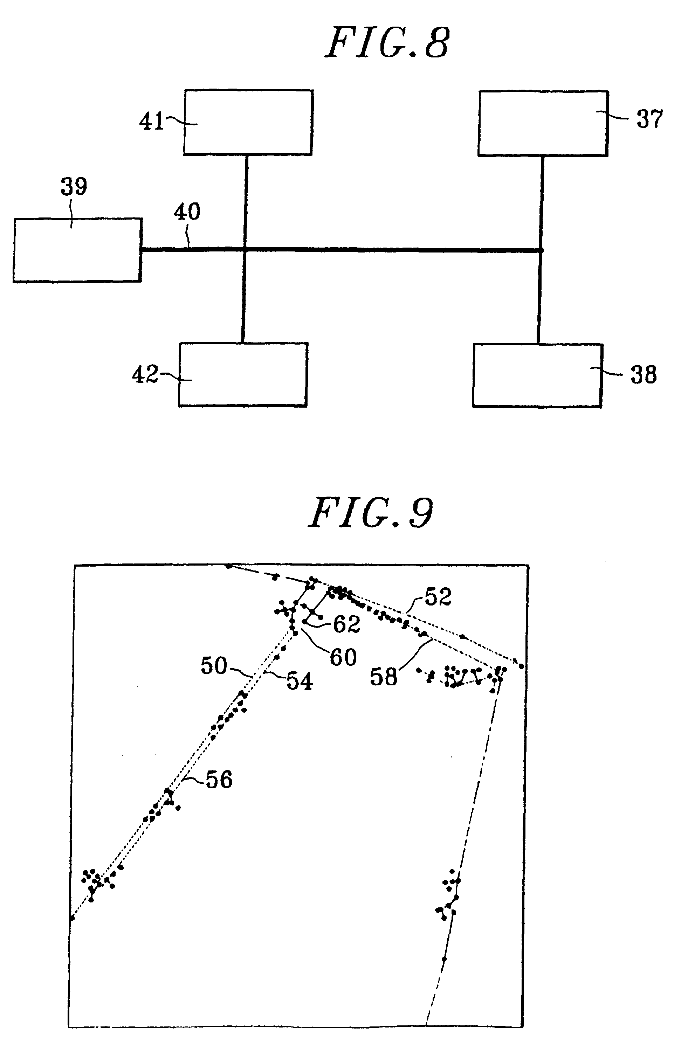

La figure 8 est une représentation simplifiée, en bloc, d'une des composantes de l'ordinateur utilisé. Un microprocesseur 39 est relié, par un bus 40, à des mémoires RAM 41 pour stocker des données et des instructions de programme, et à une mémoire ROM 42 pour stocker les instructions du programme de traitement réalisé. Un ordinateur comportant ces éléments peut en outre comporter d'autres éléments périphériques tels que le scanner ou le dispositif de visualisation mentionnés ci-dessus ou bien encore une souris, un modem, etc... Des données sur des images à traiter ou sur des programmes à appliquer peuvent être transférées à la mémoire RAM 41 à partir de supports de stockage ou de mémorisation tels que disque, CD ROM, disques magnéto-optique, disques durs, etc... Un clavier 38 permet d'entrer des instructions dans le dispositif.

D'une manière générale un appareil ou un dispositif, selon l'invention, pour traiter des informations contenues dans une image comporte :

- des moyens de mémorisation pour mémoriser des instructions de traitement des informations contenues dans l'image,
- un processeur relié aux moyens de mémorisation, qui effectue les instructions de :

   * premier traitement pour définir une zone d'intérêt de l'image,
   * réalisation d'un seuillage adaptatif de la zone d'intérêt, pour obtenir une image seuillée de cette zone d'intérêt, dite première image seuillée,
   * segmentation de l'image seuillée, pour obtenir un premier ensemble de couches morphologiques de l'image seuillée.

D'autres instructions peuvent concerner d'autres étapes ou d'autres modes de réalisation du procédé selon l'invention tel qu'il a été décrit ci-dessus.

Le dispositif ou le système décrit ci-dessus met en oeuvre un programme pour ordinateur, résidant sur un milieu support pouvant être lu par un ordinateur, et comportant les instructions permettant à un ordinateur de réaliser le procédé de traitement d'informations contenues dans une image selon l'invention, c'est-à-dire de :

- réaliser un premier traitement, permettant de définir une zone d'intérêt de l'image,
- réaliser un seuillage adaptatif de cette zone d'intérêt pour obtenir une image seuillée de cette zone d'intérêt, dite première image seuillée,
- segmenter l'image seuillée, pour obtenir un premier ensemble de couches morphologiques de l'image seuillée.

D'autres instructions peuvent être prévues, qui correspondent à divers modes de réalisation ou à des étapes particulières du procédé de traitement d'informations qui a été décrit ci-dessus.

Le procédé selon l'invention peut également être mis en oeuvre selon une version "composants" ou "hard".

La méthode de squelettisation (algorithmes de vectorisation) complète les travaux de B. Taconet (TAC90) décrits dans "Deux algorithmes de squelettisation" Actes du colloque RAE, Le Havre, BIGRE 68, p. 68-76, 1990. L'un des avantages de cet algorithme est sa relative insensibilité au bruit. De plus, cet algorithme est efficace en temps de traitement. L'étiquetage des éléments en fonction de leur degré d'intériorité dans le trait est également un atout non négligeable, dont l'utilité sera exposée un peu plus loin. En effet, le squelette issu de cette méthode est en fait une image normalisée dont les pixels sont étiquetés en fonction de leur degré d'intériorité dans la forme. La mesure de l'épaisseur des traits est ainsi directement accessible grâce à cet étiquetage.

Cet algorithme comporte une étape de recherche du degré d'intériorité de chaque pixel, puis une étape de recherche des pixels au degré d'intériorité le plus élevé.

1. Recherche du degré d'intériorité de chaque pixel.

La première étape consiste à étiqueter les pixels en fonction de leur degré d'intériorité dans la forme. Elle se décompose en deux passes successives sur l'image. Chaque passage correspond à l'application d'un masque en L qui permet d'étiqueter les pixels en fonction de leur degré d'intériorité. Le premier masque en L est appliqué sur l'image en parcourant celle-ci de haut en bas. Chaque pixel P de l'objet est étiqueté selon le masque suivant (premier masque pour la construction de l'image des degrés d'intériorité) :

| | P | P1 |
|---|---|---|
| P4 | P3 | P2 |

P est alors étiqueté en fonction de son voisinage, suivant la règle suivante : $P_0 = \inf(P1+1, P2+1, P3+1, P4+1)$.

Le second balayage est effectué du bas vers le haut de l'image. Le masque appliqué est le suivant (deuxième masque pour la construction de l'image des degrés d'intériorité) :

| P6 | P7 | P8 |
|----|----|----|
| P5 | P  |    |

P est alors étiqueté en fonction de son voisinage, suivant la règle suivante : $P_1$=inf(P5+1, P6+1, P7+1, P8+1).

Le degré d'intériorité retenu pour chaque pixel P est la plus grande valeur de $P_0$ et $P_1$ (sup($P_0$,$P_1$)).

Les pixels de degré d'intériorité les plus élevés correspondent aux points du squelette. Le squelette est obtenu en recherchant l'ensemble de ces points d'étiquette maximum.

2. Formation de l'image noyau : recherche des pixels à degré d'intériorité le plus élevé.

Cette seconde étape consiste à extraire les points significatifs du squelette en construisant une image "noyau" à partir de l'image des degrés d'intériorité. L'image noyau est en fait une image dont l'épaisseur des traits est au plus égale à deux. Elle est calculée en utilisant douze masques 3x3. Les douze masques sont obtenus par rotation des trois masques illustrés ci-dessous autour du pixel central marqué P( P=point courant, C=point de contour, X=point du fond ou de la masse interne) :

| XCX | XCX | XCX |
|-----|-----|-----|
| CPC | XPC | XPX |
| XXX | CXX | CXC |

A chaque itération, les pixels traités sont ceux dont le degré d'intériorité est égal à l'ordre de l'itération courante ainsi que ceux, de degrés inférieurs, qui ont été conservés lors des étapes précédentes.

L'affinement de l'image noyau selon les conditions de voisinage exprimées par les 16 masques obtenus par rotation des autres masques (ci-dessous), permet enfin d'obtenir le squelette.

| X0X | 000 | 000 | X00 |
|-----|-----|-----|-----|
| 1P1 | X11 | 11X | 1PO |
| X1X | X11 | 11X | X1X |

Le processus de squelettisation n'apportant aucune structuration de l'information, on réalise ensuite un suivi du squelette qui va permettre de réaliser cette structuration.

Le procédé de reconnaissance de forme selon l'invention va être expliqué en application à des objets linéaires (un réseau et ses différents tronçons). Il peut être mis en oeuvre sur d'autres types d'objets.

A partir du squelette déterminé ci-dessus, un suivi de squelette permet de construire un graphe correspondant aux objets linéaires traités. La reconnaissance du réseau découle de cette reconstruction. A l'issue de ce traitement, l'information est structurée sous forme d'un graphe reliant tous les noeuds de l'image.

Pour effectuer la reconstruction du réseau, on dispose d'un outil de polygonalisation : un tel outil permet de générer des segments à partir de points. Un exemple d'un tel outil est décrit dans la Thèse de Doctorat de l'Université de Rouen (1994) de J.M. Ogier intitulée "Contribution à l'analyse automatique de documents cartographiques : interprétation de données cadastrales".

On dispose, également, de listes de points à structures différentes. En effet, si il y a des points multiples du squelette, on peut se trouver devant différentes possibilités de poursuite du traitement. Aussi, sont constituées deux listes de résultats de suivi, et il est procédé à une fusion des données pour obtenir un suivi de trait répondant au mieux à la topologie de la forme à reconstruire.

On dispose aussi de l'information sur l'épaisseur des traits originaux : il s'agit en fait de l'information (degré d'intériorité) résultant de l'algorithme décrit ci-dessus.

On dispose, enfin, de l'image sur laquelle on travaille, c'est-à-dire ici de la couche morphologique concernée (issue de l'opération de segmentation) ainsi que de l'image originale. La couche morphologique concernée sera en général celle correspondant aux éléments, ou objets, ici linéaires.

Par ailleurs, quelle que soit l'application visée ou le métier visé (reconnaissance d'un plan de réseau de télécommunication, ou de réseau de distribution d'eau ou de gaz, ou de réseau de distribution d'électricité), on dispose de règles imposées par le métier lui-même. En particulier les lignes de câble, ou tronçons, de télécommunication relient des chambres de câble, les conduites d'eau relient des points de distribution d'eau, les lignes électriques relient des boites de dérivation, etc.. De manière générique, les arcs du réseau relient des noeuds de ce réseau. Aux noeuds du réseau peuvent se trouver des "chambres".

Dans le domaine des télécommunications, le modèle du réseau de France Télécom apprend qu'un tronçon d'artère est délimité par deux, et seulement deux, noeuds d'infrastructure. Un noeud d'infrastructure peut être une chambre, un noeud simple ou un appui en façade. De plus, il peut partir un nombre illimité de tronçons d'artère d'un noeud d'infrastructrure.

D'une manière plus générale, les règles d'organisation des données d'un thème, quel qu'il soit, fournissent des informations utiles à la reconnaissance d'un document. Cette modélisation est liée au métier ayant conduit à produire un document. On peut donc définir, dans une chaîne de reconnaissance, des "modules orientés métier" bien délimités, pour permettre, dans l'hypothèse d'une réutilisation du procédé, de ne modifier qu'une partie du système, et de préserver sa partie générique.

La reconstruction du réseau permet de fabriquer des traits, ou des arcs, à partir du squelette (l'ensemble des pixels du squelette). La fabrication de ces traits, ou arcs, résulte de l'application des règles de métier aux données du squelette.

La reconstruction d'objets utilise des primitives d'information différentes, par exemple :

- le modèle des données, qui apporte les informations liées au métier,
- les primitives de segmentation (des bipoints) qui constituent les éléments de base des objets à connaître,
- des informations issues d'objets reconnus dans d'autres couches morphologiques (les "chambres" de câble dans le cas des télécommunications).

La polygonalisation permet de réaliser des arcs (en fait : des bipoints, ou segments).

Un itinéraire polygonalisé correspondant à l'exemple déjà donné ci-dessus (en liaison avec les figures 2 à 7) est donné en figure 9. Tous les points d'articulation (ou d'inflexion), ainsi que les points de début et de fin des segments sont représentés par des sphères.

Sur cette figure, on distingue, parmi les segments, ceux qui correspondent à des éléments du réseau 50, 52 et ceux qui correspondent aux bords des parcelles 54, 56, 58.

Une grande partie des éléments du réseau est constituée d'objets linéaires longs. Les bords de parcelle qui ont subsisté ont cependant des longueurs non négligeables.

Ces éléments linéaires constituent une première primitive sur laquelle on peut s'appuyer afin de réaliser un canevas du réseau, constitué de grands segments, et dans lequel il ne restera plus qu'à identifier les éléments manquants. De tels éléments manquants sont, par exemple, repérés sur la figure 9 par les références 60, 62.

Une deuxième primitive repose sur l'épaisseur des traits. Elle constitue une primitive largement discriminante entre le réseau et les bords de parcelle.

Un seuil est pour cela défini. Un seuil sur la moyenne du degré d'intériorité dans l'image ne semble pas donner de résultat générique. A ce stade, sa définition reste manuelle.

Aux points multiples du squelette, on peut se trouver devant différentes possibilités de poursuite du traitement. Aussi, sont constituées deux listes de résultats de suivi, et il est procédé à une fusion des données pour obtenir un suivi de trait répondant au mieux à la topologie de la forme à reconstruire.

Pour la reconstruction, on utilise donc deux algorithmes de suivi de squelettes, chacun d'entre eux générant une liste d'objets.

Le premier (respectivement le deuxième) algorithme effectue un suivi de trait en privilégiant, en cas de doute, une bifurcation à gauche (respectivement à droite) dans le cas d'un noeud multiple.

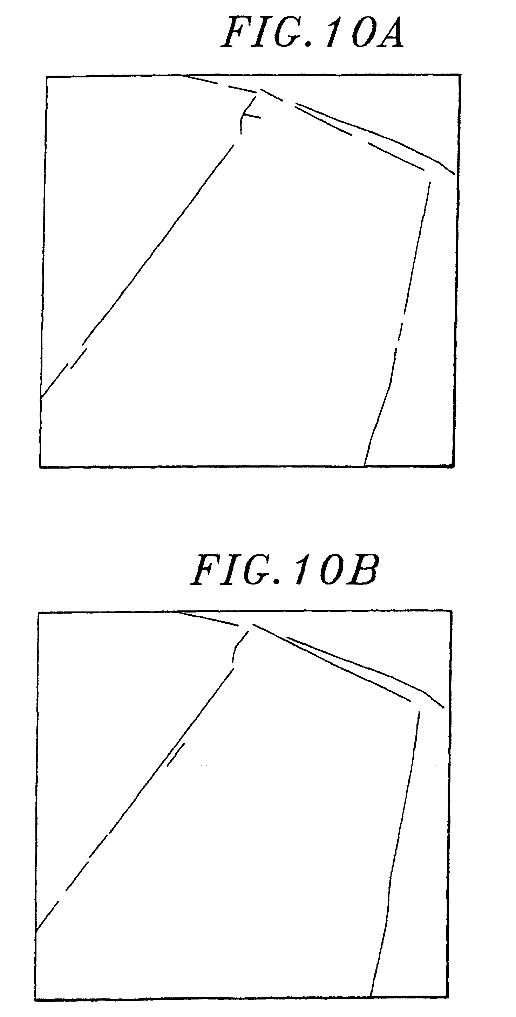

Pour reprendre l'exemple de la figure 9, l'application de ces deux algorithmes aboutit aux suivis trigonométrique et anti-trigonométrique représentés en figures 10A et 10B.

On obtient donc deux listes de segments structurant l'information de sorte que le réseau y est représenté de manière relativement continue. Afin d'exploiter au maximum ces deux listes et pour retrouver toute la continuité d'un tronçon entre deux noeuds, on réalise une fusion des données, qui permet de mettre en évidence les objets longs et droits, puisqu'ils seront représentés chacun par deux points relativement éloignés.

On peut également effectuer une sélection des données, c'est-à-dire des bipoints, afin de segmenter l'information présente dans les deux listes.

De plus, si on fait une sélection sur les objets longs, on a plus de chance de ne garder que les éléments du réseau de type "tronçons" en excluant une partie des bords de parcelle et la quasi-totalité des barbules. En effet, le seuil utilisé pour réaliser la polygonalisation est l'épaisseur du trait original. Ainsi, les bords de parcelle qui sont des traits plus fins, ont plus de chance d'être morcelés par la polygonalisation. Néanmoins, on exclue également, par cette sélection, les éléments constituant les chambres.

Le seuil à partir duquel on peut utiliser le terme "objet long" n'est pas figé avec précision. On peut utiliser un seuil d'environ 120 pixels, ce qui correspond à une longueur sur le plan papier d'environ 0,6 mm (résolution de 400 dpi). Les traitements sont peu sensibles à la fluctuation de ce seuil, aussi une détermination manuelle semble adaptée. Sur les quelques tests qui ont été réalisés, ce seuil a toujours apparu adapté, sans avoir à être modifié.

La fusion de données permet d'éliminer la redondance qui existe dans chaque liste issue des deux suivis différents, tout en permettant de compléter les informations sur les objets longs d'une liste, par rapport à l'autre. A l'issue de ce traitement, il ne restera plus qu'une liste réduite au maximum, reconstituant la majeure partie des tronçons du réseau.

Un problème posé, par cette fusion, est que les segments issus de la polygonalisation ne se recouvrent pas totalement. Ce problème vient du fait que les noeuds de départ et de fin sont différents pour les deux suivis. Ainsi, après polygonalisation, on n'obtient pas exactement les mêmes parcours. Ils sont néanmoins très proches puisqu'ils appartiennent tous les deux à la couche morphologique des tronçons du réseau.

On cherche donc à trier et à relier ensemble ces deux segments afin d'obtenir une description la plus complète possible de l'ensemble des tronçons du réseau.

Le tri consiste à supprimer d'une liste les bipoints qui sont inclus dans l'autre.

Pour cela, on définit un critère d'inclusion qui permet de déterminer si un bipoint est au voisinage d'un autre.

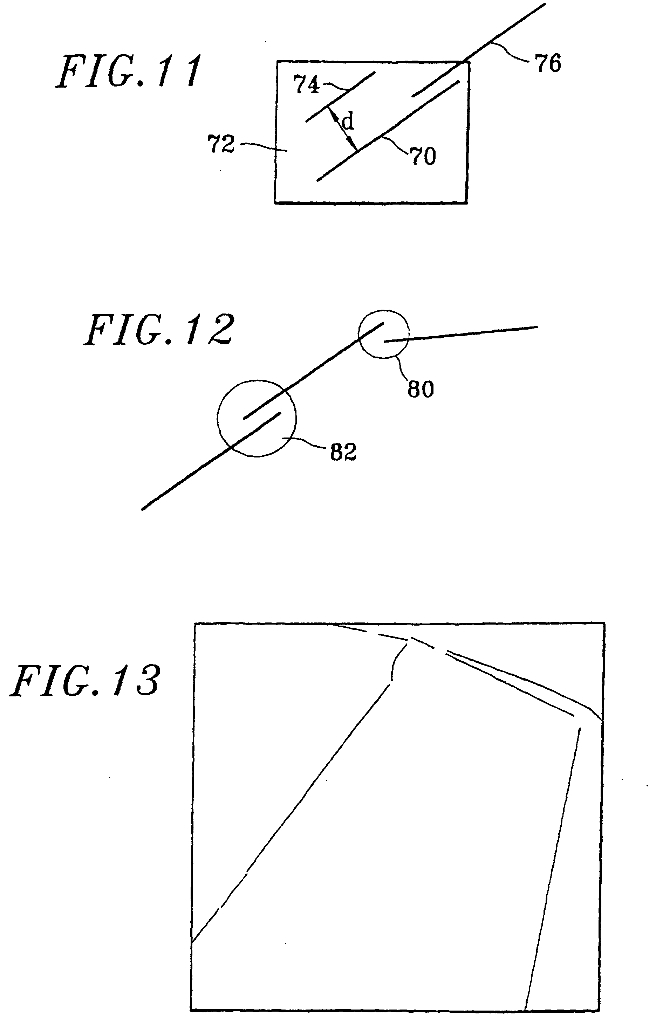

Afin de définir l'inclusion, on opère en deux étapes. La première étape (figure 11) consiste dans la délimitation d'une région à l'intérieur de laquelle se trouve un bipoint source 70. On délimite alors une région 72 qui est le rectangle englobant du bipoint ; celui-ci peut être élargi en hauteur et largeur, par exemple, de deux fois le degré d'intériorité du segment dont il est issu. Ainsi, on cherche des bipoints 74, 76 qui seraient compris dans cette région. C'est le premier critère d'inclusion.

Le deuxième critère d'inclusion consiste à mesurer, pour chaque bipoint sélectionné 74 précédemment, la distance d qui existe avec la droite formée par le bipoint source 70. La distance calculée est celle de la projection orthogonale d'un point sur une droite et cela pour les deux points qui composent chaque bipoint. Si cette distance est inférieure à un seuil pour les deux points d'un bipoint, on considère alors qu'il y a inclusion totale. Le seuil est par exemple égal au degré d'intériorité, ce qui permet d'obtenir de très bons résultats.

On définit également l'inclusion partielle qui consiste à détecter un seul point d'un bipoint inclus dans un bipoint source.

Les traitements ci-dessus ne seront pas effectués par lecture sur l'image, mais directement à partir des informations issues des listes.

A partir des éléments ainsi définis, on procède à la suppression de l'information redondante. Pour cela, une liste source est arbitrairement choisie avec laquelle le critère d'inclusion, défini précédemment, peut être évalué avec l'autre liste.

Tout bipoint inclus totalement dans un bipoint source peut être éliminé.

A la suite de ce traitement, le rôle de ces deux listes est inversé et le processus est relancé.

Il ne reste plus alors que des inclusions partielles entre les bipoints des deux listes.

Il peut également être procédé à la fusion des bipoints inclus partiellement.

Il existe divers types de configurations possibles, dont deux cas principaux 80, 82 sont représentés sur la figure 12. La référence 80 désigne un cas de bipoints non colinéaires et la référence 82 un cas de bipoints colinéaires.

D'après cette figure, il est intéressant de fusionner en un seul bipoint deux bipoints colinéaires. En effet, ces deux bipoints expriment alors une même partie de tronçons. Cette redondance partielle peut donc être supprimée. Mais, on ne fusionne pas deux segments non colinéaires.

Une des difficultés réside dans la détermination de la colinéarité. En effet, il n'est pas exclu de trouver deux segments très proches, et quasiment colinéaires, sans qu'ils le soient réellement.

Cette difficulté est contournée par l'utilisation d'un algorithme de polygonalisation tel que celui déjà mis en oeuvre précédemment. En effet, si on passe les coordonnées des deux bipoints à fusionner à la fonction de polygonalisation, avec le degré d'intériorité comme erreur maximum, le résultat sera un seul bipoint si les deux bipoints de départ sont réellement colinéaires et issus du même tronçon.

Afin d'effectuer l'opération de fusion finale, on ne travaille plus sur deux listes distinctes, mais sur une seule liste contenant les deux listes précédentes. Ceci permet d'optimiser le choix des bipoints. En effet, travailler sur deux listes revient à chercher la continuité d'un bipoint d'une liste dans l'autre liste, ce qui n'est pas forcément la solution la plus judicieuse.

Ainsi, à la suite d'un bipoint, il est possible de trouver deux autres bipoints candidats (un dans chaque liste). On considère le meilleur choix comme étant le bipoint le plus long. Il suffit donc de ne faire qu'une liste et de l'ordonner par ordre croissant de longueur. De cette façon, l'ordre de test des bipoints établira la priorité recherchée.

On place donc tous les bipoints dans un seul segment (liste source), puis on les classe par ordre croissant de longueur.

On prend un premier bipoint (le plus grand) et on recherche l'inclusion partielle avec les autres bipoints. Lorsqu'un bipoint partiellement inclus dans le plus grand bipoint est trouvé, on teste les deux bipoints par polygonalisation.

Cette phase fait appel à la connaissance de l'ordre dans lequel s'enchaînent les points afin de constituer un unique bipoint. En effet, l'algorithme de polygonalisation met en oeuvre la connaissance des deux points extrêmes de l'ensemble de bipoints à traiter. On cherche donc à connaître la position des différents points les uns par rapport aux autres :

- si le résultat de ce traitement est un bipoint, alors les deux bipoints ont été fusionnés correctement. Dans cette perspective, on efface les deux bipoints de la liste source. Une nouvelle recherche d'inclusion partielle est alors lancée à partir du nouveau bipoint ainsi créé, et le cycle recommence,
- si le résultat de la polygonalisation comporte plus de deux points, l'alignement des deux bipoints n'est pas conforme. La recherche d'inclusion partielle se poursuit alors.

Lorsque la recherche d'inclusion partielle ne fournit plus de nouveau bipoint, le bipoint issu de ce traitement est placé dans une liste résultat (mémorisation). Si aucune modification n'a été apportée à ce bipoint durant le traitement, il est effacé de la liste source.

Le plus grand des bipoints qui reste dans la liste source est alors utilisé pour relancer le traitement.

Il ne reste plus alors dans le segment résultat que des bipoints composant le canevas du réseau traité. Un exemple de résultat, à partir des listes des figures 10A et 10B, est donné en figure 13. Il subsiste encore des discontinuités dans le réseau. De plus, les chambres ont bien évidement disparu.

L'étape suivante est la structuration des bipoints. Pour cela les bipoints sont organisés de façon à regrouper ceux qui se suivent dans un même segment. Tous les segments ainsi constitués seront placés dans une liste de segments.

Cette structuration a pour but de rassembler, dans un même segment, les bipoints contigus qui appartiennent aux mêmes tronçons. Cette organisation facilitera l'analyse des morceaux manquants. De plus, cette structuration se rapproche de celle souhaitée en sortie de ces traitements. En effet, un tronçon est une entité à part entière. Chaque tronçon doit donc de préférence être reconnu individuellement, d'où cette structuration. Afin de réaliser ce regroupement, on peut opérer par analyse de proximité.

Ainsi, on recherche la continuité physique dans le voisinage très proche de chaque point qui compose le bipoint à prolonger. Cette recherche est réalisée de proche en proche, jusqu'à ne plus trouver de suite possible. Tous les bipoints ainsi détectés sont stockés dans un même segment. L'ordre dans lequel sont stockés les bipoints permet de conserver l'enchaînement logique des points d'une extrémité du tronçon à l'autre, les extrémités étant les points les plus importants à localiser.

Les traitements de regroupement sont également effectués directement à partir des listes, sans retour sur l'image. Ces traitements utilisent la détection d'inclusion telle que nous l'avons décrite précédemment. Lorsque qu'un point est détecté, on considère bien sûr le bipoint dont il est issu en totalité. La position relative de ce bipoint est connue par rapport au bipoint source.

Ceci est permis par un classement de chaque point qui compose les bipoints. Ainsi, le premier élément d'un bipoint a toujours une abscisse plus petite que son successeur. Si elle est égale, alors le classement est effectué sur l'ordonnée des points considérés. Ceci permet de connaître la position relative des quatre points traités. L'inclinaison de chaque bipoint (croissant ou décroissant) est également prise en compte. La fonction d'inclusion renvoie alors un indicateur qui précise l'ordre dans lequel les points doivent être stockés.

L'ordre de stockage peut être perturbé par la présence d'une bifurcation. Ainsi, ce n'est plus un, mais deux bipoints, ou plus, qui peuvent être détectés à proximité d'un point. Il n'existe alors plus d'ordre possible avec la structuration que nous utilisons. Une structuration sous forme d'arbre permet de résoudre ce problème.

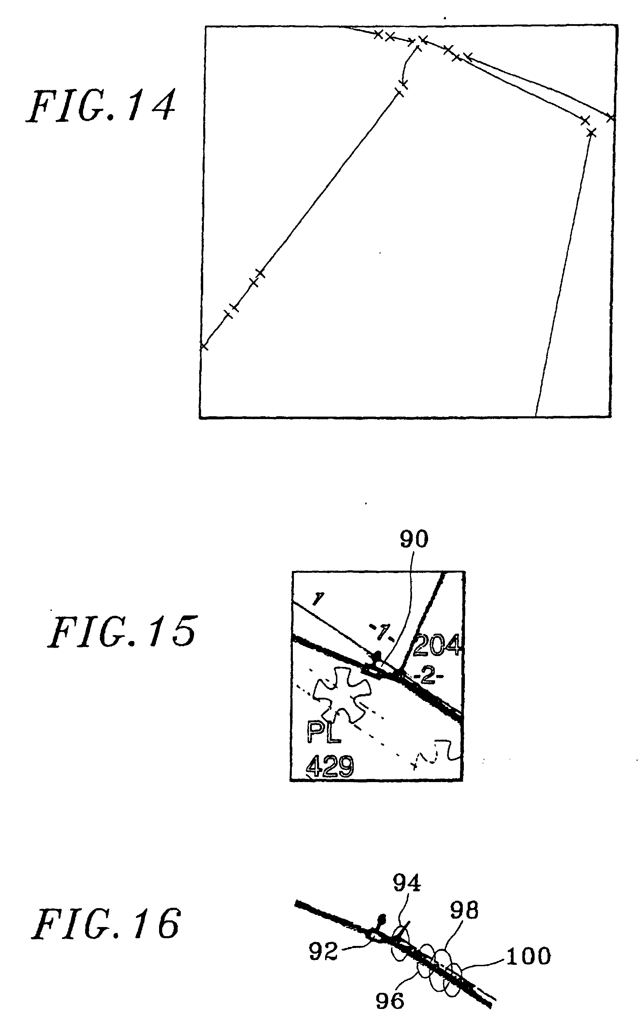

Sur la figure 14, les bipoints regroupés au sein d'un segment sont délimités par des croix. Les résultats sont satisfaisants.

Les bipoints obtenus après cette étape sont issus de plusieurs traitements : squelettisation puis suivi de squelette, polygonalisation, fusion et parfois même polygonalisation à nouveau. Même si le paramétrage des traitements conserve la validité des résultats, une vérification peut être utile.

Cette vérification repose en un retour sur la couche morphologique des tronçons.

On calcule les équations des droites passant par chaque bipoint. Puis, grâce à ces équations, on parcourt la couche ou l'image initiale en relevant l'étiquette (le degré d'intériorité) de chaque point situé entre les deux extrémités d'un bipoint. Ceci permet d'établir un pourcentage d'étiquette sur le parcours, et donc de vérifier le pourcentage d'appartenance du bipoint à la couche.

Par conséquent, on vérifie si chacun des points entre deux extrémités d'un bipoint possède dans l'image initiale un degré d'intériorité non nul, donc appartient à une forme de l'image ou à une couche morphologique.

Ce traitement est réalisé à titre indicatif, mais pourrait permettre la remise en cause d'un bipoint pour un éventuel recentrage sur la couche.

Il est difficile de tirer des conclusions sur la différence entre une validité de 90% et une validité de 100%. La qualité de la couche n'étant pas parfaite, on trouve ainsi fréquemment des points sur un tronçon qui n'en ont pas l'étiquette. Une dilatation de cette couche permet de résoudre ce problème. Néanmoins, une validité inférieure à 80% peut sembler suspecte.

Les valeurs rencontrées jusqu'ici sont très souvent de 100%, et en tout cas supérieures à 90%.

Il reste à expliquer le principe de la localisation des chambres. On part du principe qu'il est inutile de chercher à reconstituer les chambres avec les informations issues de la vectorisation. En effet, la squelettisation ainsi que les traitements qui la précèdent ont rendu ces informations peu cohérentes avec la représentation initiale. La représentation sur les planches originales est d'ailleurs parfois elle-même déformée. Ainsi, une chambre est normalement représentée par un rectangle. La taille réduite de ces éléments sur un plan semble être à l'origine de ces représentations souvent ovoïdes, comme on peut le voir sur la figure 15, où une chambre est désignée par la référence 90.

Une première localisation des chambres est effectuée par recherche des occlusions sur la couche morphologique des tronçons. Cette opération est réalisée par détection de masses connexes. Pour chaque occlusion, les coordonnées du rectangle englobant et le périmètre inférieur sont fournies. La forme 16 représente divers types possibles d'occlusion : certaines (92) sont représentatives d'une chambre, et d'autres (94, 96, 98, 100) non.

Afin d'effectuer un premier filtrage sur les occlusions, on a déterminé deux primitives du même type que celles qui ont permis de séparer les plans suivant trois couches. Elles reposent sur le périmètre intérieur de l'occlusion. Nous avons ainsi pu déterminer, sur des échantillons de plan, un périmètre minimum de trente pixels et un périmètre maximum de cent cinquante pixels, ceci pour une résolution de 400 dpi. La mise à l'échelle de ces paramètres peut être effectuée par une simple règle de proportionnalité.

Ce premier filtrage ne suffit pas à sélectionner uniquement les occlusions issues d'une chambre. Une troisième primitive est donc utilisée pour valider l'hypothèse d'une chambre. Cette troisième primitive repose sur le nombre d'extrémités de segment qui se trouve dans le voisinage où a été détectée la chambre. Ainsi, dans la très grande majorité des cas, une chambre est connectée à au moins deux tronçons. La recherche des extrémités de segment (donc des tronçons) se fait par exemple dans un carré dont le centre est le centre de l'occlusion détectée, et de côté égal à par exemple 30 pixels. Ce seuil est issu de l'expérimentation. Il fonctionne correctement avec les plans dont on dispose. Un seuil trop grand peut provoquer une fausse détection. Un seuil trop petit peut provoquer la non détection. La mise à l'échelle de ce seuil se fait par proportionnalité en fonction de l'échelle du plan à traiter.

La validation des trois primitives ci-dessus entraîne la validation de la détection de la chambre.

La chambre est alors représentée par un carré normalisé de 10 pixels de côté. Néanmoins, les coordonnées originales des chambres seront stockées dans un vecteur contenant les coordonnées du point haut à gauche du rectangle de circonscription de l'occlusion, et sera la longueur et la hauteur de ce rectangle. Cette approche permet une localisation et une reconnaissance correcte des chambres.

Le procédé ou l'algorithme de reconnaissance de formes qui a été décrit peut être mis en oeuvre à l'aide d'un dispositif tel que déjà décrit ci-dessus, en liaison avec la figure 8. Les instructions de programme correspondant au procédé de reconnaissance de formes décrit ci-dessus peuvent être stockées ou mémorisées à la place, ou en complément, des instructions de procédé de traitement d'informations contenues dans une image qui ont été décrites au début de la présente description.

Un dispositif pour mettre en oeuvre un procédé de reconnaissance de formes selon l'invention comporte donc :

- des moyens de mémorisation, pour mémoriser des informations d'image,
- un processeur, relié aux moyens de mémorisation, qui effectue les instructions de :

  * squelettisation de l'image, pour établir un squelette de l'image,
  * polygonalisation à partir des pixels du squelette de l'image, pour générer des segments bipoints,
  * structuration des bipoints pour rassembler ceux appartenant à une même forme de l'image.

D'autres instructions peuvent être effectuées par le processeur, qui correspondent à des modes particuliers de réalisation du procédé de reconnaissance de formes selon l'invention tel que décrit ci-dessus.

Un dispositif ou un système selon l'invention met en oeuvre un programme pour ordinateur résidant sur un milieu support pouvant être lu par un ordinateur et comportant des instructions permettant à l'ordinateur de réaliser le procédé de reconnaissance de formes selon l'invention, et en particulier les trois étapes qui viennent d'être rappelées ci-dessus. Il peut comporter en outre d'autres instructions permettant de réaliser d'autres étapes du procédé de reconnaissance de formes tel qu'il a été décrit dans la présente demande.

## Revendications

**1.** Procédé de traitement d'informations contenues dans une image (4), comportant :

- un premier traitement (1-4), permettant de définir une zone d'intérêt de l'image (8),
- la réalisation d'un seuillage adaptatif (1-8) de cette zone d'intérêt pour obtenir une image seuillée (10) de cette zone d'intérêt, dite première image seuillée,
- la segmentation (1-12) de l'image seuillée, pour obtenir un premier ensemble de couches morphologiques (14-1, 14-2, 14-3,... ) de l'image seuillée.

2. Procédé de traitement selon la revendication 1, dans lequel on applique en outre à chacune des couches morphologiques du premier ensemble de couches morphologiques un traitement de reconnaissance de forme.

3. Procédé de traitement selon la revendication 1 ou 2, le premier traitement (1-4) permettant de définir une zone d'intérêt de l'image, étant réalisé par seuillage ou multiseuillage.

4. Procédé de traitement selon l'une des revendications 1 à 3, les étapes de seuillage ou de multiseuillage mettant en oeuvre l'algorithme de OTSU ou de KITTLER-ILLINGWORTH.

5. Procédé de traitement selon l'une des revendications 1 à 4, le premier traitement étant suivi d'une étape d'affinement de la zone d'intérêt de l'image.

6. Procédé selon la revendication 5, l'étape d'affinement étant réalisée par dilatation ou par érosion de la zone d'intérêt définie dans l'image.

7. Procédé selon l'une des revendications 1 à 6, comportant, après segmentation de l'image seuillée, la réalisation d'une étape de seuillage des parties de l'image seuillée correspondant à une des couches morphologiques, l'image obtenue étant dite deuxième image seuillée (16-1, 16-2, 16-3,... ).

8. Procédé selon la revendication 7, la deuxième image seuillée étant segmentée, pour obtenir un deuxième ensemble de couches morphologiques.

9. Procédé selon la revendication 8, dans lequel on applique à chacune des couches du deuxième ensemble de couches morphologiques un traitement de reconnaissance de forme.

10. Procédé selon l'une des revendications 1 à 9, chaque couche morphologique rassemblant des masses connexes de pixels de l'image.

11. Procédé selon l'une des revendications 1 à 10, l'image étant un plan technique.

12. Dispositif pour traiter des informations contenues dans une image, comportant :

- des premiers moyens, pour réaliser un premier traitement (1-4), permettant de définir une zone d'intérêt de l'image,
- des deuxièmes moyens, pour réaliser un seuillage (1-8) adaptatif de ladite zone d'intérêt, et pour obtenir une image seuillée (10),
- des troisièmes moyens (1-12) de segmentation de l'imag seuillée, pour obtenir un premier ensemble de couches morphologiques (14-1, 14-2, 14-3,... ) de l'image seuillée.

13. Dispositif selon la revendication 12, comportant en outre des moyens pour appliquer à chacune des couches morphologiques du premier ensemble de couches morphologiques un traitement de reconnaissance de formes.

14. Dispositif selon l'une des revendications 12 ou 13, les premiers moyens étant des moyens de traitement par seuillage ou multiseuillage.

15. Dispositif selon la revendication 14, les premiers moyens mettant en oeuvre l'algorithme de OTSU ou de KITTLER-ILLINGWORTH.

16. Dispositif selon l'une des revendications 12 à 15, comportant en outre des moyens pour affiner la zone d'intérêt de l'image.

17. Dispositif selon la revendication 16, les moyens pour affiner la zone d'intérêt mettant en oeuvre des opérateurs de morphologie mathématique.

**18.** Dispositif selon l'une des revendications 12 à 17, comportant en outre des moyens pour réaliser, après segmentation de l'image seuillée, une étape de seuillage des parties de l'image seuillée correspondant à une des couches morphologiques, l'image obtenue étant dite deuxième image seuillée (16-1, 16-2, 16-3,... ).

**19.** Dispositif selon la revendication 18, comportant en outre des moyens pour réaliser une segmentation de la deuxième image seuillée pour obtenir un deuxième ensemble de couches morphologiques.

**20.** Dispositif selon la revendication 19, comportant en outre des moyens pour réaliser un traitement de reconnaissance de formes des couches du deuxième ensemble de couches morphologiques.

**21.** Procédé selon l'une des revendications 2 ou 9, le traitement de reconnaissance de formes appliqué comportant :

- une squelettisation de chaque couche morphologique, pour établir un squelette d'éléments de cette couche,
- une polygonalisation à partir des pixels du squelette de cette couche, pour générer des segments ou bipoints,
- une structuration des bipoints, pour rassembler ceux appartenant à une même forme de la couche morphologique.

**22.** Procédé selon la revendication 21, la squelettisation comportant :

- une recherche du degré d'intériorité de chaque pixel,
- une recherche des pixels de degré d'intériorité le plus élevé.

**23.** Procédé selon l'une des revendications 21 ou 22, la polygonalisation étant suivie d'un traitement pour déterminer les formes à reconnaître au niveau des points multiples.

**24.** Procédé selon la revendication 23, le traitement pour déterminer les formes à reconnaître au niveau des points multiples comportant la mise en oeuvre d'un premier et d'un second algorithmes de suivi de squelettes :

- le premier algorithme effectuant un suivi de trait privilégiant une bifurcation à gauche dans le cas d'un noeud multiple, générant un premier suivi de squelette,
- le second algorithme effectuant un suivi de trait privilégiant une bifurcation à droite dans le cas d'un noeud multiple, générant un second suivi de squelette.

**25.** Procédé selon la revendication 24, comportant en outre une étape de fusion des données résultant de l'application des deux algorithmes de suivi de squelette, pour supprimer l'information redondante contenue dans les deux suivis de squelette.

**26.** Procédé selon la revendication 25, la fusion des données comportant la détermination des segments, ou bipoints, d'un des suivis de squelette, qui sont inclus, partiellement ou totalement, dans l'autre.

**27.** Procédé selon la revendication 26, l'inclusion totale (ou partielle) d'un bipoint, dit bipoint à tester, dans un bipoint, dit bipoint source, étant déterminée en fonction des critères suivants :

- présence du bipoint à tester (74, 76), ou d'une de ses extrémités, dans une région prédéterminée (72) autour du bipoint source (70),
- distance, entre le bipoint à tester (74, 76) et le bipoint source (70), inférieure à un certain seuil.

**28.** Procédé selon la revendication 27, le seuil étant égal au degré d'intériorité du bipoint source.

**29.** Procédé selon l'une des revendications 26 à 28, comportant en outre une étape de suppression des bipoints d'un des suivis de squelette, qui sont inclus totalement dans l'autre, et réciproquement.

**30.** Procédé selon l'une des revendications 26 à 29, comportant en outre une étape de fusion des bipoints (80, 82) de chacune des deux listes qui sont inclus partiellement dans l'autre liste.

**31.** Procédé selon la revendication 30, comportant la fusion en un seul bipoint des bipoints colinéaires (82).

**32.** Procédé selon la revendication 31, la colinéarité de deux bipoints étant déterminée par application d'un algorithme de polygonalisation à ces deux bipoints, le degré d'intériorité d'un des deux bipoints étant pris comme marge d'erreur.

**33.** Procédé selon l'une des revendications 26 à 32, comportant en outre :

a) l'établissement d'une seule liste de bipoints, par ordre croissant de longueur,
b) la sélection du plus grand des bipoints de cette dernière liste,
c) la recherche de l'inclusion partielle avec les autres bipoints,
d) lorsqu'un bipoint partiellement inclus est trouvé lors de l'étape précédente, le test des deux bipoints par polygonalisation,
e) si le résultat de l'étape d) est positif, l'effacement des bipoints, le remplacement par le bipoint fusionné, et le retour en c),
f) la poursuite de l'étape c),si le résultat de d) comporte plus de deux points,
g) si l'étape d) ne fournit plus de nouveau bipoints, la mémorisation du dernier bipoint issu de l'étape d), l'effacement de ce bipoint de la liste de bipoints établie en a), et le retour en a).

**34.** Procédé selon l'une des revendications 21 à 33, comportant en outre une étape pour rassembler les bipoints contigus dans un même segment.

**35.** Procédé selon la revendication 34, le rassemblement des bipoints contigus étant réalisé par recherche, de proche en proche, de la continuité physique dans le voisinage très proche de chaque point d'un bipoint à prolonger par contiguïté.

**36.** Procédé selon l'une des revendications 34 ou 35, le rassemblement des bipoints contigus dans un même segment mettant en oeuvre un algorithme d'inclusion.

**37.** Procédé selon l'une des revendications 34 à 36, les bipoints étant structurés sous forme d'arbres aux points de bifurcation.

**38.** Procédé selon la revendication 22, comportant en outre une étape de vérification consistant à vérifier si chaque point d'un bipoint est contenu dans un des éléments de la couche.

**39.** Procédé selon l'une des revendications 21 à 37, la couche soumise au procédé de reconnaissance de formes comportant des chambres situées à des extrémités de tronçons, ce procédé comportant en outre une étape de recherche d'occlusions (92, 94, 96, 98, 100) dans la couche, une étape de filtrage des occlusions, une étape de recherche du nombre d'extrémités de tronçon se situant dans le voisinage où à été détectée une chambre (90).

**40.** Procédé selon la revendication 39, la recherche des occlusions étant réalisée par détection de masses connexes.

**41.** Procédé selon l'une des revendications 39 ou 40, le filtrage étant réalisé en fonction du périmètre intérieur de chaque occlusion.

**42.** Dispositif selon la revendication 13 ou 20, les moyens pour appliquer un procédé ou un traitement de reconnaissance de formes appliqué comportant :

- des premiers moyens pour réaliser une squelettisation de chaque couche morphologique, afin d'établir un squelette de cette couche,
- des deuxièmes moyens pour réaliser une polygonalisation à partir des pixels du squelette de cette couche,
- des troisièmes moyens pour structurer les bipoints et rassembler ceux appartenant à une même forme de cette couche.

**43.** Dispositif selon la revendication 42, comportant des moyens pour exécuter un premier et un second algorithmes de suivi de squelettes :

- le premier algorithme effectuant un suivi de trait privilégiant une bifurcation à gauche dans le cas d'un noeud multiple, générant un premier suivi de squelette,
- le second algorithme effectuant un suivi de trait privilégiant une bifurcation à droite dans le cas d'un noeud multiple, générant un second suivi de squelette.

**44.** Dispositif selon la revendication 43, les moyens pour exécuter un premier et un second algorithmes de suivi de squelettes permettant en outre de réaliser la fusion des données résultant de l'exécution des deux algorithmes de suivi de squelette, pour supprimer l'information redondante contenue dans les deux suivis de squelette.

**45.** Dispositif selon l'une des revendications 42 ou 43, comportant des moyens pour rassembler les bipoints contigus dans un même segment.

**Claims**

**1.** A method of processing information contained in an image (4), including:

- a first processing (1-4), for defining an area of interest of the image (8),
- effecting an adaptive thresholding (1-8) of this area of interest in order to obtain a thresholded image (10) of this area of interest, referred to as the first threshold image,
- the segmentation (1-12) of the thresholded image, in order to obtain a first set of morphological layers (14-1, 14-2, 14-3, ...) of the thresholded image.

**2.** A processing method according to claim 1, in which a shape recognition processing is also applied to each of the morphological layers of the first set of morphological layers.

**3.** A processing method according to claim 1 or 2, the first processing (1-4) making it possible to define an area of interest of the image, being effected by thresholding or multithresholding.

**4.** A processing method according to one of the claims 1 to 3, the thresholding or multithresholding steps using the OTSU or KITTLER-ILLINGWORTH algorithm.

**5.** A processing method according to one of claims 1 to 4, the first processing being followed by a step of refining the area of interest of the image.

**6.** A method according to claim 5, the refinement step being performed by expansion or erosion of the area of interest defined in the image.

**7.** A method according to one of claims 1 to 6, including, after segmentation of the thresholded image, performance of a step of thresholding the parts of the thresholded image corresponding to one of the morphological layers, the image obtained being referred to as the second thresholded image (16-1, 16-2, 16-3, ...).

**8.** A method according to Claim 7, the second thresholded image being segmented, in order to obtain a second set of morphological layers.

**9.** A method according to Claim 8, in which a shape recognition processing is applied to each of the layers of the second set of morphological layers.

**10.** A method according to one of Claims 1 to 9, each morphological layer connecting together closely related masses of pixels of the image.

**11.** A method according to one of Claims 1 to 10, the image being a technical drawing.

**12.** A device for processing information contained in an image, having:

- first means, for effecting a first processing (1-4), for defining an area of interest of the image,
- second means, for effecting an adaptive thresholding (1-8) of the said area of interest, and for obtaining a thresholded image (10),
- third means (1-12) for segmenting the thresholded image, in order to obtain a first set of morphological layers (14-1, 14-2, 14-3, ...) of the thresholded image.

13. A device according to Claim 12, also having means for applying a shape recognition processing to each of the morphological layers of the first set of morphological layers.

14. A device according to one of Claims 12 or 13, the first means being means of processing by thresholding or multithresholding.

15. A device according to Claim 14, the first means using the OTSU or KITTLER-ILLINGWORTH algorithm.

16. A device according to one of Claims 12 to 15, also having means for refining the area of interest of the image.

17. A device according to Claim 16, the means for refining the area of interest using mathematical morphology operators.

18. A device according to one of Claims 12 to 17, also having means for performing, after segmentation of the thresholded image, a step of thresholding the parts of the thresholded image corresponding to one of the morphological layers, the image obtained being referred to as the second thresholded image (16-1, 16-2, 16-3, ...).

19. A device according to Claim 18, also having means for effecting a segmentation of the second thresholded image in order to obtain a second set of morphological layers.

20. A device according to Claim 19, also having means for effecting a shape recognition processing of the layers of the second set of morphological layers.

21. A method according to one of Claims 2 or 9, the shape recognition processing applied including:

    - a skeletonisation of each morphological layer, in order to establish a skeleton of elements of this layer,
    - a polygonalisation using the pixels of the skeleton of this layer, in order to generate segments or bipoints.
    - a structuring of the bipoints, in order to collect together those belonging to one and the same shape of the morphological layer.

22. A method according to Claim 21, the skeletonisation including:

    - a search for the degree of interiority of each pixel,
    - a search for the pixels with the highest degree of interiority.

23. A method according to one of Claims 21 or 22, the polygonalisation being followed by a processing for determining the shapes to be recognised at the level of the multiple points.

24. A method according to Claim 23, the processing for determining the shapes to be recognised at the level of the multiple points including the use of first and second skeleton-tracking algorithms:

    - the first algorithm effecting a line tracking favouring a bifurcation to the left in the case of a multiple node, generating a first skeleton tracking,
    - the second algorithm effecting a line tracking favouring a bifurcation to the right in the case of a multiple node, generating a second skeleton tracking.

25. A method according to Claim 24, also including a step of merging the data resulting from the application of two skeleton-tracking algorithms, in order to eliminate the redundant information contained in the two skeleton trackings.

26. A method according to Claim 25, the merging of the data including the determination of the segments, or bipoints, of one of the skeleton trackings, which are included, partially or totally, in the other.

27. A method according to Claim 26, the total (or partial) inclusion of a bipoint, referred to as the bipoint to be tested, in a bipoint, referred to as the source bipoint, being determined as a function of the following criteria:

    - the presence of the bipoint to be tested (74, 76), or of one of its ends, in a predetermined region (72) around the source bipoint (70),

- a distance, between the bipoint to be tested (74, 76) and the source bipoint (70), less than a certain threshold.

28. A method according to Claim 27, the threshold being equal to the degree of interiority of the source bipoint.

29. A method according to one of Claims 26 to 28, also including a step of eliminating the bipoints of one of the skeleton trackings, which are completely included in the other, and vice-versa.

30. A method according to one of Claims 26 to 29, also including a step of merging the bipoints (80, 82) of each of the two lists which are partially included in the other list.

31. A method according to Claim 30, including the merging of the colinear bipoints (82) into a single bipoint.

32. A method according to Claim 31, the colinearity of the two bipoints being determined by applying a polygonalisation algorithm to these two bipoints, the degree of interiority of one of the two bipoints being taken as a margin of error.

33. A method according to one of Claims 26 to 32, also including:

   a) the establishment of a single list of bipoints, in increasing order of length,
   b) the selection of the largest of the bipoints in this last list,
   c) seeking of partial inclusion with the other bipoints,
   d) when a partially included bipoint is found during the previous step, testing the two bipoints by polygonalisation.
   e) if the result of step d) is positive, the erasure of the bipoints, replacement by the merged bipoint, and return to c),
   f) the continuation of step c), if the result of d) has more than two points,
   g) if step d) supplies no new bipoints, the storage of the last bipoint issuing from step d), the erasure of this bipoint from the list of bipoints established at a), and return to a).

34. A method according to one of Claims 21 to 33, also including a step for collecting together the contiguous bipoints in one and the same segment.

35. A . method according to Claim 34, the collecting together of the contiguous bipoints being effected by seeking, step by step, physical continuity in the very close vicinity of each point of a bipoint to be extended by contiguity.

36. A method according to one of Claims 34 or 35, the collecting together of the contiguous bipoints in the same segment using an inclusion algorithm.

37. A method according to one of Claims 34 to 36, the bipoints being structured in the form of trees at the bifurcation points.

38. A method according to Claim 22, also including a verification step consisting in verifying whether each point in the bipoint is contained in one of the elements in the layer.

39. A method according to one of Claims 21 to 37, the layer subjected to the shape recognition method having chambers situated at ends of sections, this method also including a step of seeking occlusions (92, 94, 96, 98, 100) in the layer, a step of filtering the occlusions, and a step of seeking the number of section ends situated in the vicinity where a chamber (90) was detected.

40. A method according to Claim 39, the occlusions being sought by the detection of closely related masses.

41. A method according to one of Claims 39 or 40, the filtering being effected as a function of the internal perimeter of each occlusion.

42. A device according to Claim 13 or 20, the means for applying a shape recognition method or processing applied including:

- first means for effecting a skeletonisation of each morphological layer, in order to establish a skeleton of this layer,

- second means for effecting a polygonalisation from the pixels of the skeleton of this layer,
- third means for structuring the bipoints and collecting together those belonging to one and the same shape in this layer.

**43.** A device according to Claim 42, having means for executing first and second skeleton-tracking algorithms:

- the first algorithm effecting a line tracking favouring a bifurcation to the left in the case of a multiple node, generating a first skeleton tracking,
- the second algorithm effecting a line tracking favouring a bifurcation to the right in the case of a multiple node, generating a second skeleton tracking.

**44.** A device according to Claim 43, the means for executing first and second skeleton-tracking algorithms also making it possible to merge the data resulting from the execution of the two skeleton-tracking algorithms, in order to eliminate the redundant information contained in the two skeleton trackings.

**45.** A device according to one of Claims 42 or 43, having means for collecting together the contiguous bipoints in one and the same segment.

**Patentansprüche**

**1.** Verfahren zur Bearbeitung von in einem Bild (4) enthaltenen Informationen, umfassend:

- eine erste Bearbeitung (1-4), die es ermöglicht, einen Interessenbereich in dem Bild (8) zu definieren,

- die Durchführung einer adaptiven Schwellenbildung (1-8) dieses Interessenbereichs, um ein Schwellenbild (10) dieses Interessenbereichs zu erhalten, genannt erstes Schwellenbild,

- die Segmentierung (1-12) des Schwellenbilds, um eine erste Gruppe von morphologischen Schichten (14-1, 14-2, 14-3, ...) des Schwellenbilds zu erhalten.

**2.** Bearbeitungsverfahren nach Anspruch 1, bei dem man ferner auf jede der morphologischen Schichten der ersten Gruppe von morphologischen Schichten eine Formerkennungsbearbeitung anwendet.

**3.** Bearbeitungsverfahren nach Anspruch 1 oder 2, bei dem die erste Bearbeitung (1-4) die Definition eines Interessenbereichs des Bilds erlaubt und durch Schwellenbildung oder Vielfach-Schwellenbildung erfolgt.

**4.** Bearbeitungsverfahren nach einem der Ansprüche 1 bis 3, bei dem die Schritte zur Schwellenbildung oder Vielfach-Schwellenblldung den OTSU- oder den KITTLER-ILLINGWORTH-Algorithmus verwenden.

**5.** Bearbeitungsverfahren nach einem der Ansprüche 1 bis 4, bei dem auf die erste Bearbeitung ein Schritt zur Verfeinerung des Bildinteressenbereichs folgt.

**6.** Verfahren nach Anspruch 5, bei dem der Schritt zur Verfeinerung mittels Dilatation oder Erosion des im Bild definierten Interessenbereichs erfolgt.

**7.** Verfahren nach einem der Ansprüche 1 bis 6, umfassend nach der Segmentierung des Schwellenbilds die Durchführung eines Schritts zur Schwellenbildung bei Teilen des Schwellenbilds entsprechend einer der morphologischen Schichten, wobei das erhaltene Bild das zweite Schwellenbild (16-1, 16-2, 16-3, ...) ist.

**8.** Verfahren nach Anspruch 7, bei dem das zweite Schwellenbild segmentiert wird, um eine zweite Gruppe von morphologischen Schichten zu erhalten.

**9.** Verfahren nach Anspruch 8, bei dem man auf jede der Schichten der zweiten Gruppe von morphologischen Schichten eine Formerkennungsbearbeitung anwendet.

**10.** Verfahren nach einem der Ansprüche 1 bis 9, bei dem jede morphologische Schicht zusammenhängende Gruppen von Bildpixeln beinhaltet.

**11.** Verfahren nach einem der Ansprüche 1 bis 10, bei dem das Bild ein technischer Plan ist.

**12.** Vorrichtung zur Bearbeitung von in einem Bild enthaltenen Informationen, umfassend:

- eine erste Einrichtung zur Durchführung einer ersten Bearbeitung (1-4), die es ermöglicht, einen Interessenbereich im Bild zu definieren,

- eine zweite Einrichtung zum Durchführen einer adaptiven Schwellenbildung (1-8) des Interessenbereichs und zum Erhalten eines Schwellenbilds (10),

- eine dritte Einrichtung (1-12) zur Segmentierung des Schwellenbilds, um eine erste Gruppe von morphologischen Schichten (14-1, 14-2, 14-3, ...) des Schwellenbilds zu erhalten.

**13.** Vorrichtung nach Anspruch 12, ferner umfassend eine Einrichtung zum Anwenden einer Formerkennungsbearbeitung auf jede der morphologischen Schichten der ersten Gruppe von morphologischen Schichten.

**14.** Vorrichtung nach einem der Ansprüche 12 oder 13, bei der die erste Einrichtung eine Einrichtung zur Bearbeitung mittels Schwellenbildung oder Vielfach-Schwellenbildung ist.

**15.** Vorrichtung nach Anspruch 14, bei der die erste Einrichtung den OTSU- oder den KITTLER-ILLINGWORTH-Algorithmus verwendet.

**16.** Vorrichtung nach einem der Ansprüche 12 bis 15, ferner umfassend eine Einrichtung zur Verfeinerung des Bildinteressenbereichs.

**17.** Vorrichtung nach Anspruch 16, bei der die Einrichtung zur Verfeinerung des Interessenbereichs mathematische Morphologie-Operatoren verwendet.

**18.** Vorrichtung nach einem der Anspruch 12 bis 17, ferner umfassend eine Einrichtung zur Durchführung eines Schritts der Schwellenbildung bei Teilen des Schwellenbilds entsprechend einer der morphologischen Schichten nach der Segmentierung des Schwellenbilds, wobei das erhaltene Bild das zweite Schwellenbild (16-1, 16-2, 16-3, ...) ist.

**19.** Vorrichtung nach Anspruch 18, ferner umfassend eine Einrichtung zum Durchführen einer Segmentierung des zweiten Schwellenbilds, um eine zweite Gruppe von morphologischen Schichten zu erhalten.

**20.** Vorrichtung nach Anspruch 19, ferner umfassend eine Einrichtung zum Durchführen einer Formerkennungsbearbeitung der Schichten der zweiten Gruppe von morphologischen Schichten.

**21.** Verfahren nach einem der Ansprüche 2 bis 9, bei dem die angewandte Formerkennungsbearbeitung umfaßt:

- eine Skelettierung jeder morphologischen Schicht, um ein Skelett von Elementen dieser Schicht zu erstellen,

- eine Polygonalisierung ausgehend von den Pixeln des Skeletts dieser Schicht, um Segmente oder Bipunkte zu erzeugen,

- eine Strukturierung der Bipunkte, um jene zu sammeln, die zu ein und derselben Form der morphologischen Schicht gehören.

**22.** Verfahren nach Anspruch 21, bei dem die Skelettierung umfaßt:

- eine Ermittlung des Interioritätsgrads jedes Pixels,

- eine Ermittlung der Pixel mit dem höchsten Interioritätsgrad.

**23.** Verfahren nach einem der Ansprüche 21 oder 22, bei dem auf die Polygonalisierung eine Bearbeitung folgt, um im Bereich der Vielfach-Punkte die zu erkennenden Formen zu bestimmen.

**24.** Verfahren nach Anspruch 23, bei dem die Bearbeitung zur Bestimmung der zu erkennenden Formen im Bereich der Vielfach-Punkte die Verwendung eines ersten und eines zweiten Skelettverfolgungsalgorithmus umfaßt:

- wobei der erste Algorithmus eine Strichverfolgung durchführt, die im Fall eines Vielfach-Knotens eine Links-Bifurkation bevorzugt, was eine erste Skelettverfolgung erzeugt,

- wobei der zweite Algorithmus eine Strichverfolgung durchführt, die im Fall eines Vielfach-Knotens eine Rechts-Bifurkation bevorzugt, was eine zweite Skelettverfolgung erzeugt.

25. Verfahren nach Anspruch 24, ferner umfassend einen Schritt der Fusion der Daten, die aus der Anwendung der zwei Skelettverfolgungsalgorithmen resultieren, um die in den zwei Skelettverfolgungen enthaltene redundante Informationen zu beseitigen.

26. Verfahren nach Anspruch 25, bei dem die Datenfusion die Bestimmung der Segmente oder Bipunkte einer der Skettverfolgungen umfaßt, die teilweise oder vollständig in der anderen enthalten sind.

27. Verfahren nach Anspruch 26, bei dem das vollständige (oder teilweise) Enthaltensein eines Bipunkts, genannt zu testender Bipunkt, in einem Bipunkt, genannt Quellen-Bipunkt, als Funktion der folgenden Kriterien bestimmt wird:

- Vorhandensein des zu testenden Bipunkts (74, 76) oder eines seiner Enden in einem Vorbestimmten Bereich (72) um den Quellen-Bipunkt (70) herum,

- Abstand zwischen dem zu testenden Bipunkt (74,76) und dem Quellen-Bipunkt (70) kleiner als eine bestimmte Schwelle.

28. Verfahren nach Anspruch 27, bei dem die Schwelle gleich dem Interioritätsgrad des Quellen-Bipunkts ist.

29. Verfahren nach einem der Ansprüche 26 bis 28, ferner umfassend einen Schritt zur Beseitigung der Bipunkte einer der Skelettverfolgungen, die vollständig in der anderen enthalten sind, und umgekehrt.

30. Verfahren nach einem der Ansprüche 26 bis 29, ferner umfassend einen Schritt zur Fusion der Bipunkte (80, 82) jeder der zwei Listen, die teilweise in der anderen Liste enthalten sind.

31. Verfahren nach Anspruch 30, umfassend die Fusion kolinearer Bipunkte (82) zu einem einzigen Bipunkt.

32. Verfahren nach Anspruch 31, bei dem die Kolinearität von zwei Bipunkten durch Anwenden eines Polygonalisierungsalgorithmus auf diese zwei Bipunkte bestimmt wird, wobei der Interioritätsgrad eines der zwei Bipunkte als Fehlergrenze herangezogen wird.

33. Verfahren nach einem der Ansprüche 26 bis 32, ferner umfassend:

a) Erstellung einer einzigen Liste von Bipunkten, geordnet nach steigender Länge,

b) Auswahl des größten der Bipunkte dieser letztgenannten Liste,

c) Ermittlung des teilweisen Enthaltenseins bezüglich der anderen Bipunkte,

d) wenn beim vorhergehenden Schritt ein teilweise enthaltener Bipunkt gefunden wird, Test der zwei Bipunkte durch Polygonalisierung,

e) wenn das Ergebnis des Schritts d) positiv ist, Löschen der Bipunkte, Ersetzen durch den fusionierten Bipunkt und Rückkehr zu c),

f) Fortsetzen des Schritts c), wenn das Ergebnis von d) mehr als zwei Punkte umfaßt,

g) wenn der Schritt d) keine neuen Bipunkte liefert, Speichern des letzten aus dem Schritt d) ausgegebenen Bipunkts, Löschen dieses Bipunkts aus der in a) erstellten Liste von Bipunkten, und Rückkehr zu a).

34. Verfahren nach einem der Ansprüche 21 bis 33, ferner umfassend einen Schritt zum Sammeln der aneinander-

**EP 0 993 650 B1**

grenzenden Bipunkte in ein und demselben Segment.

**35.** Verfahren nach Anspruch 34, bei dem das Sammeln der angrenzenden Bipunkte durch schrittweises Ermitteln der physischen Kontinuität in der sehr engen Nachbarschaft jedes Punkts eines durch Aneinandergrenzen fortzusetzenden Bipunkts erfolgt.

**36.** Verfahren nach einem der Ansprüche 34 oder 35, bei dem das Sammeln aneinandergrenzender Bipunkte in ein und demselben Segment unter Verwendung eines Inklusionsalgorithmus erfolgt.

**37.** Verfahren nach einem der Ansprüche 34 bis 36, bei dem die Bipunkte an den Bifurkationspunkten baumförmig strukturiert sind.

**38.** Verfahren nach Anspruch 22, ferner umfassend einen Überprüfungsschritt, der darin besteht, zu überprüfen, ob jeder Punkt eines Bipunkts in einem der Elemente der Schicht enthalten ist.

**39.** Verfahren nach einem der Ansprüche 21 bis 37, bei dem die Schicht, die dem Formerkennungsverfahren unterworfen wird, Kammern umfaßt, die an Abschnittsenden liegen, wobei das Verfahren ferner einen Schritt zur Ermittlung von Okklusionen (92, 94, 96, 98, 100) in der Schicht umfaßt, einen Schritt zur Filterung der Okklusionen und einen Schritt zur Ermittlung der Zahl von Abschnittsenden, die sich in der Nachbarschaft befinden, wo eine Kammer (90) ermittelt worden ist.

**40.** Verfahren nach Anspruch 39, bei dem die Ermittlung der Okklusionen durch Erfassung von zusammenhängenden Gruppen erfolgt.

**41.** Verfahren nach einem der Ansprüche 39 oder 40, bei dem die Filterung als Funktion des Innenumfangs jeder Okklusion erfolgt.

**42.** Vorrichtung nach Anspruch 13 oder 20, bei der die Einrichtung zum Anwenden eines ausgeübten Formerkennungsverfahrens oder -behandlung umfaßt:

- eine erste Einrichtung zum Durchführen einer Skelettierung jeder morphologischen Schicht, um ein Skelett dieser Schicht zu erstellen,

- eine zweite Einrichtung zum Durchführen einer Polygonalisierung ausgehend von den Skelettpixeln dieser Schicht,

- eine dritte Einrichtung zum Strukturieren der Bipunkte und zum Sammeln jener, die zu ein und derselben Form dieser Schicht gehören.

**43.** Vorrichtung nach Anspruch 42, umfassend eine Einrichtung zum Durchführen eines ersten und eines zweiten Skelettverfolgungsalgorithmus:

- wobei der erste Algorithmus eine Strichverfolgung durchführt, die im Fall eines Vielfach-Knotens eine Links-Bifurkation bevorzugt, was eine erste Skelettverfolgung erzeugt,
- wobei der zweite Algorithmus eine Strichverfolgung durchführt, die im Fall eines Vielfach-Knotens eine Rechts-Bifurkation bevorzugt, was eine zweite Skelettverfolgung erzeugt.

**44.** Vorrichtung nach Anspruch 43, bei der die Einrichtung zum Durchführen eines ersten und eines zweiten Skelettverfolgungsalgorithmus ferner die Durchführung der Fusion der Daten ermöglicht, die aus der Durchführung der zwei Skelettverfolgungsalgorithmen resultieren, um die in den zwei Skelettverfolgungen enthaltene redundante Information zu beseitigen.

**45.** Vorrichtung nach einem der Ansprüche 42 oder 43, umfassend eine Einrichtung zum Sammeln der aneinander angrenzenden Bipunkte in ein und demselben Segment.

25

## FIG. 1A

Plan technique — 2

↓

scanner — 1-2

↓

Image source — 4

→ 1-4 Vision globale préseuillage → masque 6

1-6 — ET

↓

8 — Image masquée

↓

1-8 — Vision locale : seuillage adaptatif → Image du dessin 10

*FIG. 1B*

Image du dessin — 10

Extraction des masses connexes — 1-10

Image des formes étiquetées — 12

1-12

Tri des formes par critères morphologiques

14-3
14-2
14-1 — Couches physiques du document

4 — Image source

ET

16-3
16-2
16-1 — Imagettes des formes

# FIG.2

# FIG.3

## FIG.4

## FIG.5

# FIG.6

FIG.7A

FIG.7B

FIG.7C

*FIG.8*

*FIG.9*

## FIG.10A

## FIG.10B

*FIG.11*

*FIG.12*

*FIG.13*

*FIG.14*

*FIG.15*

*FIG.16*